(19) Europäisches Patentamt
European Patent Office
Office européen des brevets

(11) EP 2 725 076 A1

(12) **EUROPEAN PATENT APPLICATION**
published in accordance with Art. 153(4) EPC

(43) Date of publication:
**30.04.2014 Bulletin 2014/18**

(21) Application number: **12802286.0**

(22) Date of filing: **20.06.2012**

(51) Int Cl.:
***C09D 167/00*** (2006.01) ***B05D 5/00*** (2006.01)
***B05D 7/24*** (2006.01) ***B63B 59/04*** (2006.01)
***C09D 5/16*** (2006.01) ***C09D 7/12*** (2006.01)

(86) International application number:
**PCT/JP2012/065758**

(87) International publication number:
**WO 2012/176809 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2011 JP 2011139679**

(71) Applicant: **Chugoku Marine Paints, Ltd.**
**Hiroshima 739-0652 (JP)**

(72) Inventors:
- **NIIMOTO, Jyunji**
**Otake-shi**
**Hiroshima 739-0652 (JP)**
- **SEKI, Yasuyuki**
**Otake-shi**
**Hiroshima 739-0652 (JP)**
- **MASUDA, Satoshi**
**Otake-shi**
**Hiroshima 739-0652 (JP)**

(74) Representative: **HOFFMANN EITLE**
**Patent- und Rechtsanwälte**
**Arabellastrasse 4**
**81925 München (DE)**

(54) **TWO-COMPONENT HYDROLYSIS-TYPE ANTIFOULING PAINT COMPOSITION, ANTIFOULING COATING FILM, AND METHOD FOR PRODUCING ANTIFOULING SUBSTRATE**

(57) [Problem] To provide an antifouling paint composition which, while reducing volatile organic compounds (VOCs), has good coating workability at low temperatures as well as at room temperature, and which is capable of forming coating films having excellent mechanical strength and good long-term antifouling properties.

[Solution] The two-component hydrolyzable antifouling paint composition includes two liquids that are a first component and a second component, the first component being a liquid including a reaction mixture (A) including a polyester resin (a3) obtained by polycondensation of an acid component (a1) and a polyhydric alcohol component (a2), and an acetoacetyl group-containing compound (B), the second component being a liquid including zinc oxide (C), the solid component of the reaction mixture (A) having an acid value and a hydroxyl value of 50 to 200 mgKOH/g and 100 mgKOH/g or less, respectively, and the two-component antifouling paint composition substantially not containing copper and copper compounds.

EP 2 725 076 A1

## Description

## TECHNICAL FIELD

The present invention relates to a two-component hydrolyzable antifouling paint composition having low environmental load and reduced impact on human body, which can impart excellent antifouling properties, etc. to the substrate surfaces of ships, underwater structures, fishing nets, fishing gears and the like. The present invention also relates to an antifouling coating film formed by hardening the paint composition and a method for producing an antifouling substrate employing the antifouling paint composition.

## BACKGROUND ART

The surfaces of substrates of ships, underwater structures, fishing nets, and the like which are exposed to water for long term easily undergo the attachment of various aquatic organisms including animals such as oysters, mussels and barnacles, plants such as sea weeds, and bacteria. The attachment and proliferation of such aquatic organisms on the substrate surfaces could cause the following problems.

For example, the attachment and proliferation of such aquatic organisms on the bottom of a ship (the part of a ship contacting with water) cause an increase in the surface roughness of the bottom of the ship to increase the sailing resistance, possibly resulting in high fuel costs.

The attachment and proliferation of such aquatic organisms on fishing nets including aquaculture nets and fixed nets could clog the reticulations, resulting in serious problems such as oxygen deficiency and mortality of acuacultured and caught fish.

The attachment and proliferation of such aquatic organisms on the surfaces of underwater structures could damage anticorrosion coating films applied on the surfaces, to deteriorate the strength and functions of the underwater structures and significantly shorten their service life. For example, the attachment and proliferation of aquatic organisms on seawater plumbing pipes for thermal power/nuclear power plants could interfere with the circulation of cooling water supply.

In order to prevent aquatic organisms from attaching and propagating, research and development efforts have been directed to various paint compositions (antifouling paint compositions) to be applied on substrate surfaces for forming antifouling coating films.

Specifically, the following one-component antifouling paint compositions as shown in Patent Documents 1 to 12 have been proposed.

Patent Document 1: An antifouling paint polyester resin composition in which an aliphatic polyester prepared by copolymerizing at least one selected from the group consisting of glycerin, ethylene glycol and 1,4-butanediols is used as a hydrolyzable resin in a polyester composed of succinic acid and 1,2-propylene glycol.

Patent Document 2: An antifouling paint composition comprising, as a vehicle component, a hydrolyzable polyester resin obtained by allowing an oxyacid and/or its condensation product, a specific polyvalent carboxylic acid and/or its acid anhydride and a polyhydric alcohol to react with one another, a copper compound of a monovalent organic acid having 5 to 18 carbon atoms.

Patent Document 3: An antifouling paint hydrolyzable polyester resin which is mainly composed of an aliphatic polyester containing a specific amount of a metal salt of a specific hydroxycarboxylic acid.

Patent Document 4: A polyester resin composition for an antifouling paint, the composition comprising a predetermined amount of a polyester prepared by copolymerizing a dicarboxylic acid having a specific structure and a glycol having a specific number of carbon atoms.

Patent Document 5: An antifouling paint composition comprising a binder comprising a carboxyl group-containing resin with a specific acid value, a metal-containing antifouling agent and a carboxyl group-containing monobasic acid compound.

Patent Document 6: An antifouling paint composition comprising a hydrolyzable polyester having a specific structural unit and containing a specific number of carboxyl groups on both molecular terminals.

Patent Document 7: An antifouling paint composition comprising a resin, a polyester resin having a specific acid value and an antifouling agent, the resin being prepared by allowing (A) a carboxyl group, a specific acrylic resin and an oxide or a hydroxide of a divalent or more metal atom to react with one another under predetermined conditions.

Patent Document 8: An antifouling and antiweed polyester-based resin composition prepared by incorporating an antifouling agent to a polybutylene terephthalate copolymer using polytetramethylene glycol and/or isophthalic acid as a copolymerization component.

Patent Document 9: An antifouling paint comprising a biocide and a solution or dispersion of a binder polymer that is hydrolyzable to an acid functional polymer.

Patent Document 10: An antifouling paint composition comprising a hydrolyzable self-polishing resin (for example, an acrylic resin or a polyester resin) having a specific side chain, cupric oxide and bis(2-pyridine thiol-1-oxide) copper salt.

Patent Document 11: An antifouling paint hydrolyzable polyester resin mainly composed of a dicarboxylic acid component (A) and a glycol component (B), wherein the dicarboxylic component (A) comprises at least one selected from the group consisting of a phthalic acid component, an isophthalic acid component and a terephthalic acid component, and the glycol component (B) comprises a glycol having a specific structure.

Patent Document 12: An antifouling paint composition comprising a polyester-based resin, a copper-based antifouling agent and acetylacetone serving as a chelating agent.

As disclosed in the Patent Documents 1 to 12, the resin component contained in a conventional one-component antifouling paint composition is generally a hydrolyzable polyester resin. The polyester resin is superior in antifouling performance. Because of its easy synthesis by esterification between acid and alcohol through dehydration condensation, the polyester resin is easily hydrolyzed in water such as sea water and fresh water. That is, it is considered that when this antifouling paint composition is applied onto a substrate to form an antifouling coating film, the polyester resin contained in the antifouling coating film, which is hydrolyzed in sea water with the passage of time, exhibits self-polishing properties and decomposed matters generated by the hydrolysis are easily incorporated into metabolic processes of microorganisms or the like.

In recent years, from the viewpoint of environmental concern, it has been an important issue in the field of antifouling paints how to reduce volatile organic compound (VOC) contents in paints, in addition to providing prolonged antifouling performance (long-term antifouling properties) and reducing the frequency of recoating operations. In the United States and Hong Kong, for example, antifouling paints to be applied outdoors are limited to paint compositions wherein the content of VOC is 400 g or less per 1 L of the paint compositions.

Patent Documents 1 to 12 do not sufficiently study the reduction of VOC in the one-component antifouling paint composition.

The research conducted by the inventors of the present invention has found that conventional one-component antifouling paint compositions employing polyester resins when containing reduced amount of VOC, depending on the molecular weight of the polyester resins, might be able to provide improved performance in terms of either coating workability or long-term antifouling properties, but could not provide improved performance in terms of both coating workability and long-term antifouling properties, i.e., these properties are in a trade-off relationship.

For example, when the molecular weight of the polyester resin is high, it is necessary to use a large amount of a solvent in order to make the viscosity of a paint composition suitable for coating procedure. That is, ensuring coating workability for practical use in this case would increase the VOC amount in the paint composition and make the resulting paint composition environmentally unfriendly.

Although the amount of an organic solvent can be reduced by lowering the molecular weight of the polyester resin to lower the viscosity of the paint composition, this would significantly increase hydrolyzing rate of the antifouling coating film in sea water, i.e., would not allow for maintaining the hydrolyzing rate at an appropriate value, resulting in deteriorated long-term antifouling properties.

In order to satisfy the demands for the reduction of VOC, there has also been proposed an antifouling paint composition used such that immediately prior to coating procedure, a first component comprising a polyester resin is mixed with a second component comprising zinc oxide and cupric oxide, etc. and then the mixture is applied, i.e., a two-component antifouling paint composition. In the two-component antifouling paint composition, after the first component is mixed with the second component, the polyester resin component, zinc oxide and cupric oxide are reacted with one another to form a hydrolyzable metallic crosslinked product. The paint composition thus can have greatly reduced VOC value, and allows for maintaining coating workability, and exhibits long-term antifouling properties because of its stable hydrolysis mechanism.

For example, Patent Document 13 discloses a two-component antifouling paint composition comprising a first component comprising polyester carboxylic acid, and a second component that is a paste comprising zinc oxide and cupric oxide, in which the content of VOC is below a specific value.

However, the two-component antifouling paint composition of low VOC type disclosed in Patent Document 13, although achieving good coating workability at normal temperature, has insufficient margin for its viscosity as a result of of its considerably small solvent amount for VOC reduction, leading to deteriorated coating workability at the time of coating procedure in winter (at low temperatures) when the temperature of the paint is lowered to increase the viscosity of the paint. That is, employing the two-component antifouling paint composition of Patent Document 13 in the coating procedure under low-temperature conditions would require performing a step of heating the paint or a step of adding an organic solvent to increase the amount of the VOC in order to reduce the paint viscosity.

As described above, the conventional two-component antifouling paint composition still needs to be improved with respect to the reduction of VOC and the coating workability under low-temperature conditions.

CITATION LIST

PATENT DOCUMENTS

Patent Document 1: JP-A-7-166106
Patent Document 2: JP-A-7-082513
Patent Document 3: JP-A-8-176501
Patent Document 4: JP-A-7-53899
Patent Document 5: JP-A-9-132736
Patent Document 6: JP-A-11-255869
Patent Document 7: JP-A-2000-248206
Patent Document 8: JP-A-57-128742
Patent Document 9: JP-A-2-196869
Patent Document 10: JP-A-10-298455
Patent Document 11: JP-A-2010-95585
Patent Document 12: JP-A-2000-248207
Patent Document 13: WO2010/073995

## SUMMARY OF THE INVENTION

### PROBLEM TO BE SOLVED BY THE INVENTION

The present invention has been made to solve the above problems with the conventional antifouling paint compositions. It is an object of the present invention to provide an antifouling paint composition that is superior in coating workability not only at normal temperature but also at low temperature while having reduced amount of VOC, and that can form a coating film exhibiting superior mechanical strength and good antifouling properties for a long period of time.

It is another object of the present invention to provide an antifouling coating film that is formed from such an antifouling paint composition and exhibits superior mechanical strength and good antifouling properties for a long period of time.

It is still another object of the present invention to provide a method, employing such an antifouling composition under conditions of superior coating workability and achieving VOC reduction, for producing an antifouling substrate exhibiting superior mechanical strength and good antifouling properties for a long period of time.

### MEANS FOR SOLVING THE PROBLEM

A two-component hydrolyzable antifouling paint composition of the present invention is a two-component hydrolyzable antifouling paint composition comprising two liquids that are a first component and a second component, the first component comprising a reaction mixture (A) comprising a polyester resin (a3) obtained by polycondensation of an acid component (a1) and a polyhydric alcohol component (a2), and an acetoacetyl group-containing compound (B), the second component comprising a zinc oxide (C), the solid content of the reaction mixture (A) having an acid value and a hydroxyl value of are 50 to 200 mgKOH/g and 100 mgKOH/g or less, respectively, and the two-component hydrolyzable antifouling paint composition substantially not containing copper and copper compounds.

In the two-component hydrolyzable antifouling paint composition of the present invention, it is preferable that the second component comprises a rosin and/or rosin derivative (D).

In the two-component hydrolyzable antifouling paint composition of the present invention, it is preferable that the reaction mixture (A) comprises the polyester resin (a3) that has a weight-average molecular weight (Mw) of 5,000 or less, as measured by gel permeation chromatography (GPC).

In the two-component hydrolyzable antifouling paint composition of the present invention, it is preferable that the content of the zinc oxide (C) is 10 to 300 parts by weight relative to 100 parts by weight of the solid content of the reaction mixture (A).

In the two-component hydrolyzable antifouling paint composition of the present invention, it is preferable that the content of the rosin and/or rosin derivative (D) is 0.5 to 300 parts by weight relative to 100 parts by weight of the solid content of the reaction mixture (A).

In the two-component hydrolyzable antifouling paint composition of the present invention, it is preferable that the content of the acetoacetyl group-containing compound (B) is 0.1 to 80 parts by weight relative to 100 parts by weight of the rosin and/or rosin derivative (D).

In the two-component hydrolyzable antifouling paint composition of the present invention, it is preferable to further comprise an antifouling agent excluding copper and copper compounds.

In the two-component hydrolyzable antifouling paint composition of the present invention, it is preferable that the antifouling agent is zinc pyrithione.

In the two-component hydrolyzable antifouling paint composition of the present invention, it is preferable to further comprise at least one plasticizer selected from the group consisting of chlorinated paraffin, petroleum resins, ketone resins, tricresyl phosphate, polyvinyl ethyl ether, dialkyl phthalate and (meth)acrylic polymers.

In the two-component hydrolyzable antifouling paint composition of the present invention, it is preferable to further comprise a (meth)acrylic acid metal salt copolymer.

In the two-component hydrolyzable antifouling paint composition of the present invention, it is preferable to further comprise an extender pigment excluding zinc oxide.

In the two-component hydrolyzable antifouling paint composition of the present invention, it is preferable to further comprise a pigment dispersant.

In the two-component hydrolyzable antifouling paint composition of the present invention, it is preferable to further comprise a color pigment.

In the two-component hydrolyzable antifouling paint composition of the present invention, it is preferable to further comprise a dehydrating agent.

In the two-component hydrolyzable antifouling paint composition of the present invention, it is preferable that the content of a volatile organic compound excluding the acetoacetyl group-containing compound (B) is 400 g or less per 1 L of the two-component hydrolyzable antifouling paint composition.

In the two-component hydrolyzable antifouling paint composition of the present invention, it is preferable that the viscosity of a paint prepared by mixing the first component with the second component, as measured at 5°C at 60 minutes later from the preparation of the paint, is 2 Pa·s or less.

An antifouling coating film of the present invention is formed by hardening any of the above two-component hydrolyzable antifouling paint composition.

A method for producing an antifouling substrate of the present invention comprises coating or impregnating a substrate with any of the two-component hydrolyzable antifouling paint composition and then hardening the composition to thereby form an antifouling coating film.

A method for producing a two-component antifouling paint composition of the present invention comprises the following steps (1) and (2) that are carried out in an optional order,
the two-component antifouling paint composition comprising two liquids being the following first component and second component,
the solid content of a reaction mixture prepared in the step (1) having an acid value and a hydroxyl value of 50 to 200 mgKOH/g and 100 mgKOH/g or less, respectively, and
the two-component antifouling paint composition substantially not containing copper and copper compounds,
the step (1) being a step of polycondensing an acid component (a1) and a polyhydric alcohol component (a2) to prepare a reaction mixture (A) comprising a polyester resin (a3), and then mixing the reaction mixture (A) with an acetoacetyl group-containing compound (B) to prepare a first component; and
the step (2) being a step of preparing a second component that is a liquid containing zinc oxide (C).

## ADVANTAGEOUS EFFECTS OF INVENTION

The two-component hydrolyzable antifouling paint composition of the present invention is capable of reducing environmental load and adverse effects to human body because of its reduced VOC to achieve good coating workability and drying properties, and can form an antifouling coating film superior in mechanical strength and long-term antifouling properties (uniform consumption property and static antifouling properties).

The antifouling coating film of the present invention, which is prepared by using such a two-component hydrolyzable antifouling paint composition well-balanced in various performance aspects, can exhibit superior antifouling properties and superior mechanical strength for a long period of time.

The method for producing an antifouling substrate of the present invention, which employs such a two-component antifouling paint composition, can manufacture an antifouling substrate having superior mechanical strength and superior long-term antifouling properties under conditions of reduced VOC and superior coating workability.

## DESCRIPTION OF EMBODIMENTS

The two-component hydrolyzable antifouling paint composition, the antifouling coating film and the method for producing an antifouling substrate of the present invention are described hereinafter in detail.

[Two-component hydrolyzable antifouling paint composition]

The two-component hydrolyzable antifouling paint composition (hereinafter, also referred to simply as "antifouling paint composition") of the present invention is a two-component antifouling paint composition comprising two liquids which are a first component and a second component described below, wherein the acid value and the hydroxyl value of the solid content of the following reaction mixture (A) are 50 to 200 mgKOH/g and 100 mgKOH/g or less, respectively, and wherein the two-component antifouling paint composition does not substantially contain copper and copper compounds.

First component: A liquid comprising a reaction mixture (A) comprising a polyester resin (a3) obtained by polycondensation of an acid component (a1) and a polyhydric alcohol component (a2), and an acetoacetyl group-containing compound (B); and

Second component: A liquid which comprising a zinc oxide (C).

The term of "two-component hydrolyzable antifouling paint composition" may be used to indicate not only a state where the two components included therein are stored or transported without being mixed, but also a state where the first component have been mixed with the second component in the two-component hydrolyzable antifouling paint composition. Particularly, the latter state where the two components have been mixed with each other is also referred to as a "mixed paint".

The antifouling paint composition of the present invention is a two-component paint composition, and thus the first component and the second component are mixed with each other, and the resulting two-component antifouling paint composition of the present invention (mixed paint) is applied onto a target (substrate) so that an antifouling coating film is formed thereon.

It is considered that when the first component is mixed with the second component, a reaction indicated by the following chemical reaction formula progresses.

First, before the mixing procedure, a polyester resin contained in the first component has carboxylic groups as its side chains (see (A) below).

In the preparation of a mixed paint by mixing the first component with the second component, H of the carboxylic groups in the polyester resin are released, to generate carboxyl ions ($COO^-$) (see (B) below). Then, the carboxyl ions and zinc oxide derived from the second component react with each other to form a hydrolyzable metallic crosslinked product, as indicated by (C) below. The mixed paint further contains an acetoacetyl group-containing compound (B) derived from the first component. The acetoacetyl group possessed by this acetoacetyl group-containing compound (B) exhibits chelating function with respect to zinc ions, and thus free zinc ions are little by little supplied to the carboxyl ions of the polyester chain. This suppresses the abrupt formation of the hydrolyzable metallic crosslinked product, i.e., reduces the rate proceeding from the following (B) to (C). As a result, abrupt viscosity increase can be suppressed and paintable time can be prolonged.

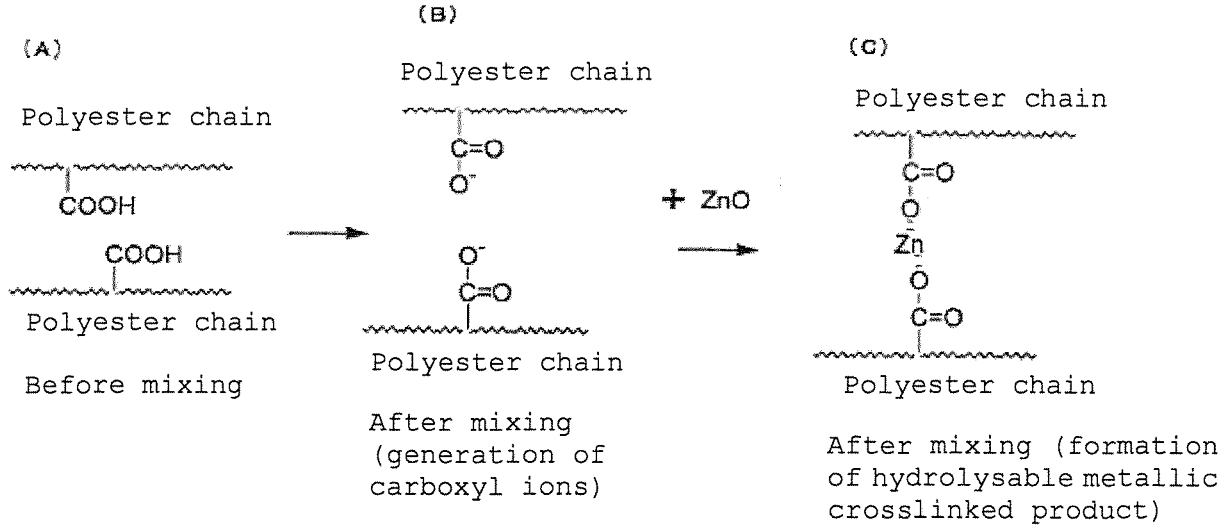


Chemical reaction formula (I)

The antifouling paint composition of the present invention does not contain copper and copper compounds as

a metal component. In an antifouling paint composition comprising a first component comprising a polyester resin and a second component comprising copper and copper compounds as in conventional antifouling paints, immediately after mixing the first component with the second component, such a paint composition if containing the acetoacetyl group-containing compound (B) has a viscosity maintained at a low level, but the viscosity is quickly increased as a result of comparatively rapid formation of a hydrolyzable metallic crosslinked product via Cu, instead of Zn in the above reaction formula (shortened paintable time), and fine particles are generated to deteriorate coating workability (this problem, which is significant when rosin or a rosin derivative is contained, will be described later in the item "<(C) Rosin and Rosin Derivative>").

The present invention is free from these problems, because neither copper nor copper compounds are contained therein.

It is considered that the generation of these fine particles is probably caused by a reaction between the acetoacetyl group-containing compound (B), and copper or copper compounds. These fine particles deteriorate not only coating workability but also appearance of a coating film, such as significant lowering of luster. The acetoacetyl group, exhibiting a chelating action on metal ions, forms a complex with copper ions. In view of its chelating constant, the complex thus formed is extremely stable. Thus, the formation of fine particles is probably considered to result from complicated complexes being easily formed due to the conformation of copper.

On the other hand, the second component of the antifouling paint composition of the present invention contains, as a metal component, zinc oxide, but not copper and copper compounds. The acetoacetyl group forms a complex with zinc ions. However, this complex, having lower stability as compared with the complex with copper ions, is considered to hardly form complicated complexes. For this reason, upon mixing the first component with the second component, no fine particles or the like are generated in the two-component antifouling paint composition, and an increase in the viscosity can be suppressed for a long period of time immediately after the mixing procedure, not only at normal temperature (for example, 15 to 25°C) but also at a low temperature (for example, at about 5°C).

Normally, it is necessary to add some amount of VOC (Volatile Organic Compound) in order to lower the viscosity. The antifouling paint composition of the present invention, even when containing a small amount of VOC, has a longer paintable time and can exhibit good coating workability.

Such an advantageous effect is exhibited as long as the solvent is an acetoacetyl group-containing compound, and is not exhibited in the case where the solvent has a completely different chemical structure from that of the acetoacetyl group-containing compound, and not exhibited in the case of ketone-based compounds similar to the acetoacetyl group-containing compound (for example, 1,2-diketone structure-containing compounds such as diacetyl, and 1,4-diketone structure-containing compounds such as 2,5-hexanedione).

As described above, by limiting the resin components, solvents and metal components to specific type, the paint composition of the present invention is superior in coating workability even at a low temperature while achieving a low VOC, and can form a coating film exhibiting superior mechanical strength and good antifouling properties for a long period of time.

The paint composition of the present invention, because of not (substantially) containing copper and copper compounds, can also avoid various problems caused by the inclusion of copper compounds, such as the degradation of copper and copper compounds due to ultraviolet rays or moisture, and the discoloration or the like at the time of outdoor exposure attributed to such degradation.

In the present specification, the expression "not substantially containing copper and copper compounds" indicates embodiments in which the two-component paint composition contains none of copper and copper compounds (content: 0 weight%) and embodiments in which the two-component paint composition contains copper or copper compounds at such an extremely small content that allows a mixed paint prepared by mixing the first component with the second component to have no fine particles derived from copper or copper compounds and allows the resulting coating film to undergo no discoloration attributable to copper or copper compounds (normally, the total content of copper and/or copper compounds is 100 ppm or less (for example, about 10 to 100 ppm)). In the latter embodiments, the content of copper or copper compounds, which depends on conditions influencing the discoloration and the generation of fine particles (e.g., temperature and pH), needs to be properly adjusted according to such conditions. Including no copper and copper compounds is preferred from the viewpoint of ensuring to prevent the copper or copper compound-derived discoloration and generation of fine particles.

From the viewpoint of favorable coating workability, in the antifouling paint composition of the present invention, the viscosity of a mixed paint prepared by mixing the first component with the second component, as measured at 5°C at 60 minutes later from the preparation of the mixed paint, is preferably 20 Poise (2 Pa·s) or less, and more preferably 5 to 20 Poise (0.5 to 2 Pa·s) from the viewpoint of coating workability at a cold place and preventing the running of the paint in the case where a long paintable time (usable time) are required.

1. First Component

The first component of the two-component hydrolyzable antifouling paint composition of the present invention is a liquid that comprises, as an essential component, an reaction mixture (A) and an acetoacetyl group-containing-compound (B) serving as a solvent, the reaction mixture (A) comprising a polyester resin (a3) obtained by polycondensation of an acid component (a1) and a polyhydric alcohol component (a2). The first component may contain optional components as will be described later, in accordance with desired objects.
It is preferable that the first component does not substantially contain ZnO, in order for a hydrolyzable metallic crosslinked product not to be formed before the first component is mixed with the second component. The wording "does not substantially contain ZnO" used herein represents that ZnO may be contained in the first component at an amount extremely small enough not to increase the viscosity of the first component as a result of the formation by ZnO of the hydrolyzable metallic crosslinked product which leads to significantly deteriorating workability when mixing the first component with the second components in coating procedure. In order to make sure to prevent the formation of a hydrolyzable metallic crosslinked product before the mixing with the second component, it is more preferable that the first component does not contain ZnO.

<Reaction Mixture (A)>

The reaction mixture (A) is a preparation obtained by polycondensation of the acid component (a1) and the polyhydric alcohol component (a2), and this composition comprises a polyester resin (a3), and in many cases, contains unreacted monomers ((a1) and (a2)), oligomers, a solvent, a catalyst or the like. The reaction mixture (A) is usually used as it is, as the first component.
The acid component (a1) is not particularly limited as long as the component is a polybasic acid (divalent or more carboxylic acid) having in one molecule two or more carboxyl groups that is capable of polycondensation reaction with OH groups of the polyhydric alcohol component (a2) described later; an alkyl ester thereof or an acid anhydride thereof.
Examples of the acid component (a1) include:

aromatic dicarboxylic acids such as terephthalic acid, isophthalic acid, phthalic acid, and naphthalene dicarboxylic acid;
aliphatic carboxylic acids such as adipic acid, sebacic acid, azelaic acid, succinic acid, himic acid, 1,6-cyclohexane dicarboxylic acid;
trivalent or more carboxylic acids (polybasic acids) such as trimellitic acid and pyromellitic acid;
lower alkyl esters thereof (e.g., C1-C4 alkyl esters); and
acid anhydrides thereof.

The dibasic acids such as the aromatic dicarboxylic acids and the saturated aliphatic dicarboxylic acids may be used in one type alone or two types or more. The trivalent or more polybasic acids may be used singly or in combination of two or more kinds.
The polyhydric alcohol component (a2) represents a (divalent or more) alcohol having two or more hydroxyl groups (OH groups) in one molecule. Examples of the polyhydric alcohol component (a2) include dihydric or more polyhydric alcohols such as ethylene glycol, propylene glycol, 1,2-propanediol, 1,3-propanediol, 1,3-butanediol, 1,4-butanediol, neopentyl glycol, 1,5-pentanediol, 1,6-hexanediol, 3-methyl pentanediol, diethylene glycol, 1,4-cyclohexanedimethanol, 3-methyl-1,5-pentanediol, 2-methyl-1,3-propanediol, 2,2-diethyl-1,3-propanediol, 2-butyl-2-ethyl-1,3-propanediol, hydrogenated bisphenol A, ethylene oxide adducts or propylene oxide adducts of bisphenol A, trimethylolethane, trimethylolpropane, glycerin and pentaerythritol. These polyhydric alcohol components (a2) may be used singly or in combination of two or more kinds.
A hydroxyl acid such as dimethylol propionic acid may be subjected together with the acid component (a1) and the polyhydric alcohol component (a2) to polycondensation reaction. In order to adjust the viscosity and to seal terminals so as to control reactivity or the like, monocarboxylic acids (such as benzoic acid and p-t-butyl benzoic acid) may be subjected together with the acid component (a1) and the polyhydric alcohol component (a2) to polycondensation reaction.
From the viewpoint of exhibiting an excellent reactivity with zinc oxide (easy formation of hydrolyzable metallic crosslinked products) while the viscosity hardly increases when mixing the first component with the second component, the content of structural units derived from the acid component (a1) in the polyester resin (a3) (100 weight %) contained in the reaction mixture (A) is preferably 5 to 95 weight %, more preferably from 10 to 90 weight %, most preferably 20 to 80 weight %.
The content of structural units derived from the polyhydric alcohol component (a2) in the polyester resin (a3) (100 weight %) contained in the reaction mixture (A) is preferably 5 to 95 weight %, more preferably 10 to 90 weight %,

most preferably 20 to 80 weight %.

The reaction mixture (A) is prepared by mixing the acid component (a1) with the polyhydric alcohol component (a2) and then by allowing the mixture to undergo polycondensation reaction (esterification reaction or transesterification reaction) by conventionally known production method, for example, melting method, solvent method (reflux method) using toluene, xylene or the like. The polycondensation reaction can be performed under reduced pressure at 200 to 300°C in the absence of catalysts or in the presence of a catalyst such as antimony trioxide, germanium oxide and N-butyl titanate.

The viscosity of the reaction mixture (A) (immediately after its preparation) at 25°C is preferably 500 mPa·s or less, more preferably 100 to 500 mPa·s, still more preferably 200 to 400 mPa·s. If the viscosity exceeds 500 mPa·s, it is difficult to exhibit favorable coating workability, even when the volatile organic compound (VOC) is maintained at a low level, for example, 400 g or less per 1 L of the two-component hydrolyzable antifouling paint composition.

It is preferable that the reaction mixture (A) includes a polyester resin (a3) having a weight-average molecular weight (Mw) of 5,000 or less. This weight-average molecular weight is preferably 4, 000 or less, more preferably 3, 000 or less. If this weight-average molecular weight exceeds 5,000, the viscosity of the polyester resin (A) is high, and the viscosity becomes excessively high when mixing the first component with the second component. As a result, the need for excellent coating workability arises by lowering the viscosity through diluting with solvents, which tends to increase the VOC amount. In view of this, it is preferable that the weight-average molecular weight is 5, 000 or less. If the weight-average molecular weight is less than 500, because of the low molecular weight, the coating film after dried still has stickiness. The weight-average molecular weight is thus preferably 500 or more.

The weight-average molecular weight of the polyester resin (a3) is a value measured by gel permeation chromatography (GPC) using a standard polystyrene calibration curve based on the following conditions.

<GPC conditions>

Pump: L-6200 manufactured by Hitachi
Column: Hitachi Chemical Gel Pack GL-420, GL-430, and GL-440
Eluent solvent: Tetrahydrofuran

The solid content acid value of the reaction mixture (A) is measured by titration with potassium hydroxide (KOH), and represented by a numerical value (mg) of potassium hydroxide required to neutralize 1 g of the solid content of the reaction mixture (A) used as a sample. The solid content hydroxyl value of the reaction mixture (A) is measured by titration with potassium hydroxide (KOH), and represented by a numerical value (mg) of potassium hydroxide required to acetylate OH groups contained in 1 g of the solid content of the reaction mixture (A) used as a sample.

The solid content of the reaction mixture (A) used to measure the solid content acid value and the solid content hydroxyl value refers to a heating residue (nonvolatile content) obtained by weighing 1 g of the prepared reaction mixture (A) on a flat-bottom plate, spreading the mixture evenly using a wire of known weight and then drying the mixture for one hour at 125°C.

The solid content acid value of the reaction mixture (A) is 50 to 200 mgKOH/g, preferably 80 to 150 mgKOH/g, still more preferably 90 to 110 mgKOH/g. If the solid content acid value is less than 50 mgKOH/g, the reaction between the polyester (a3) and zinc oxide becomes slow (the formation of a hydrolyzable metallic crosslinked product hardly occurs) when mixing the first component with the second component; this deteriorates the drying properties of the coating film. If the solid content acid value exceeds 200 mgKOH/g, defects such as coating film cracking occur.

The solid content acid value of the reaction mixture (A) can fall within the above-mentioned range by using known means. Examples of such means include a method comprising converting the polyester resin (a3) contained in the reaction mixture (A) into an acid-terminal polyester obtained by introducing an acid to its terminal with a dibasic acid, and a method comprising converting the polyester resin (a3) into a polybasic acid-modified polyester obtained by modifying with a polybasic acid.

The acid-terminal polyester is prepared, for example, by mixing a dibasic acid and a dihydric alcohol and then allowing the mixture to undergo polycondensation reaction (esterification reaction or transesterification). The polybasic acid-modified polyester is prepared, for example by synthesizing a polyester and then introducing a polybasic acid (e.g., trimellitic anhydride) to the main chain of the polyester for modification with the polybasic acid. The polybasic acid-modified polyester may also be produced by introducing a polybasic acid to the main chain at the same time as the polycondensation reaction between an acid component and an alcohol component. However, synthesizing a polyester and then adding a polybasic acid to the polyester main chain leads to more reduction in gelation and in thickening and facilitates controlling the reaction. Only polybasic acids such as trimellitic anhydride may be introduced; however, this method involves more localization of carboxyl groups, which easily increases polarity and leads to viscosity increase.

In view of this, the combined use of polybasic acids with monocarboxylic acids or dicarboxylic acids is more preferred.

The solid content hydroxyl value of the reaction mixture (A) is 100 mgKOH/g or less, preferably 50 mgKOH/g or less, still more preferably 20 mgKOH/g or less, most preferably 10 mgKOH/g or less. The solid content hydroxyl value exceeding 100 mgKOH/g, in the case where rosin or a petroleum resin is contained, reduces the compatibility between these components and the polyester resin (a3), and deteriorates the appearance and the water resistance of the coating film formed.

The solid content hydroxyl value of the reaction mixture (A) can be 100 mgKOH/g or less by adjusting the number of OH groups through adjusting the compounding ratios of the monomer components ((a1), (a2) and optional monomer components) or through adding a monocarboxylic acid after polycondensation reaction thereby allowing the OH groups of the polyester (a3) to react with the carboxylic groups of the monocarboxylic acid.

When the molecular weight of the polyester is lowered for lowering the viscosity, the hydroxyl groups tend to increase. In this case, the hydroxyl value can be adjusted, when preparing the reaction mixture (A), by subjecting e.g., a monocarboxylic acid such as benzoic acid, together with (a1) and (a2), to polycondensation reaction thereby allowing the hydroxyl groups to react with carboxyl groups of e.g., monocarboxylic acid.

<Acetoacetyl Group-Containing Compound (B)>

The acetoacetyl group-containing compound (B) is a compound that is used as a solvent in the first component, and has an acetoacetyl group (β-diketone structure, 1,3-diketone structure).

A more specific one of the acetoacetyl group-containing compound (B) is a compound represented by the following structural formula (I).

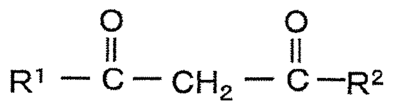
(I)

In the formula (I), each of $R^1$ and $R^2$ is independently a hydroxyl group, a straight-chained or branched alkyl group having 1 to 4 carbon atoms, an alkoxy group or $-O-X-CR^3=CHR^4$, wherein each of $R^3$ and $R^4$ is independently hydrogen or a methyl group; X is a single bond, an alkylene group, $COOR^5$ or $CONHR^6$, wherein each of $R^5$ and $R^6$ is a straight-chained or branched alkylene group having 1 to 6 carbon atoms. $R^1$ is preferably a methyl group or a $-CH_2CN$ group.

Specific examples of the acetoacetyl group-containing compound (B) include:

acetoacetate alkenyl esters such as vinyl acetoacetate and allyl acetoacetate;
(meth)acrylic acid-acetoacetate diesters of alkylene glycol such as 2-acetoacetoxyethyl acrylate, 2-acetoacetoxyethyl methacrylate, 2-acetoacetoxypropyl acrylate,
2-acetoacetoxypropyl methacrylate and 2-cyanoacetoacetoxyethyl methacrylate;
crotonic acid-acetoacetate diesters of alkylene glycol such as 2-acetoacetoxyethyl crotonate and 2-acetoacetoxypropyl crotonate; and
acetoacetate esters of N-alkylol(meth)acrylamide such as ethyl acetoacetate, N-(acetoacetoxymethyl)acrylamide, N-(acetoacetoxymethyl) methacrylamide, N-(acetoacetoxyethyl)acrylamide and N-(acetoacetoxyethyl)methacrylamide.

Among these, preferable examples of the acetoacetyl group-containing compound (B) include acetylacetone, acetoacetylethyl methacrylate, ethyl acetoacetate, methyl acetoacetate, t-butyl acetoacetate, and allyl acetoacetate. It is considered that when these acetoacetyl group containing-compounds (B) are contained in the first component, upon mixing the first component with the second component, zinc ions derived from ZnO contained in the second component exhibit a chelating action with an appropriate intensity, and thereby prevents the abrupt formation of a hydrolyzable metallic crosslinked product and suppress the abrupt increase in the viscosity, thereby making it possible to improve the coating workability.

In view of a high flash point, versatility and the like, the acetoacetyl group-containing compound (B) is more preferably acetylacetone.

From the viewpoint of drying properties of the coating film, the content of the acetoacetyl group-containing compound (B) is preferably 0.1 to 50 parts by weight, more preferably 0.1 to 30 parts by weight, relative to 100 parts by weight of the solid content of the reaction mixture (A).

The content of the acetoacetyl group-containing compound (B) is preferably 0.1 to 5 weight % relative to 100 weight % of the two-component paint composition. The two-component paint composition containing the acetoacetyl

group-containing compound (B) within this range can suppress the abrupt increase in viscosity and ensure the improvement in the coating workability at the time of mixing the first component with the second component.

As will be described later, in the case where the second component contains rosin and/or rosin compounds, the content of the acetoacetyl group-containing compound (B) is preferably 0.1 to 80 parts by weight, more preferably 0.1 to 50 parts by weight, relative to 100 parts by weight of the rosin and/or rosin derivative (D).

It is considered that upon mixing the first component with the second component containing rosin and/or rosin derivative (D), the acetoacetyl-containing compound (B) allows for good dispersibility among three components: the zinc oxide (C) and a metal pigment, the rosin and/or rosin derivative (D) and the polyester resin (a3), consequently contributing to lowering the viscosity. If the content of the acetoacetyl group-containing compound (B) is less than 0.1 parts by weight, the viscosity tends to be not reduced. If the content thereof exceeds 80 parts by weight, when the resulting paint is applied to an object, the acetoacetyl group-containing compound (B) tends to remain inside the coating film, with a tendency of the reduction of drying properties or the discoloration of the coating film attributable to the acetoacetyl group of the acetoacetyl group-containing compound (B).

2. Second component

The second component of the two-component hydrolyzable antifouling paint composition of the present invention comprises the zinc oxide (C) as an essential component (for example, a paste-state liquid) and may further contain the following optional components, if necessary.

Zinc oxide contained in the second component is an active pigment, and functions as a hardener when the first component is mixed with the second component. As indicated by the chemical formula (1), zinc oxide reacts with carboxyl groups of the polyester resin (a3) to form -COO- groups that are residues derived from the carboxyl groups of the polyester resin (A) from which hydrogen ions have been isolated; and to form a hydrolyzable metallic salt crosslinked product formed by $Zn^{2+}$, i.e., a metal ion of zinc oxide, for example, -COO··$Zn^{2+}$··OOC-. The hydrolyzable metallic salt crosslinked product easily hydrolyzes and exhibits stable hydrolysis reaction (low variation in hydrolysis rate with the passage of time). That is, the paint composition of the present invention can form a coating film (that is excellent in long-term antifouling properties) that demonstrates a long-term coating film consumption. Since it is two-component reaction type, coating viscosity is maintained in practical for coating (excellent in coating workability) even when the content of VOC is set to 400 g or less per 1 L of the two-component antifouling paint composition under a low temperature.

Whether zinc ions derived from the zinc oxide (C) have been reacted with carboxyl groups of the polyester resin (a3) may be confirmed by seeing the change of the paint hue before and after the mixing of the first component with the second component, or by seeing viscosity increase with the passage of time of the mixed paint.

Particles with various diameters may be used for the zinc oxide (C) contained in the second component. Rather than using a zinc oxide having a large particle diameter, using fine particle zinc oxide such as active zinc oxide is preferable, because of facilitating crosslinking reaction between the carboxyl groups of the polyester resin (a3) and the zinc ions derived from zinc oxide (reaction for forming a hydrolyzable metallic salt crosslinked product), thus improving the coating film hardness in a short time and exhibiting damage resistance of the coating film at an early stage.

The content of the zinc oxide (C) in the antifouling paint composition of the present invention is preferably 10 to 300 parts by weight, more preferably 50 to 200 parts by weight, relative to 100 parts by weight of the solid content of the reaction mixture (A). If the content is less than 10 parts by weight, the coating film properties such as hardenability of the antifouling paint composition and coating film strength tend to deteriorate. If the content exceeds 300 parts by weight, the coating film properties tend to be poor. For example, cracking on the coating film occurs.

Optional components

The optional components are described hereinafter. The optional components may be contained in both the first component and the second component, or may be contained in either the first component or the second component. The optional components may be added during mixing the first component with the second component, or may be added to a mixed paint obtained by mixing the first component with the second component.

<(D) Rosin and Rosin Derivative>

The antifouling paint composition of the present invention may further contain a rosin and/or rosin derivative (D). Examples of the rosin include gum rosin, wood rosin and tall oil rosin. Examples of the rosin derivative include hydrogenated rosins, polymerized rosins, rosin maleate, aldehyde-modified rosin, rosin metal salts and rosin amines. The rosin and/or rosin derivative (D) may be used singly or in combination of two or more kinds. The rosin and/or rosin derivative (D) may be contained either in the first or in the second component, or added to a mixture obtained by mixing the first component with the second component. From the viewpoint of reducing the viscosity of the second component,

the rosin and/or rosin derivative (D) is preferably contained in the second component.

When the rosin and/or rosin derivative (D) is included in the second component in the antifouling paint composition of the present invention, the rosin and/or rosin derivative (D) reacts with the zinc oxide (C) to form a rosin zinc salt, and thus viscosity is increased. When the second component containing the rosin zinc salt formed as described above is mixed with the first component, zinc ions are drawn from the rosin zinc salt by the chelating action of the acetoacetyl group-containing compound (B) (that is, the rosin zinc salt is separated into a rosin and/or rosin derivative, and zinc ions chelated by the acetoacetyl group-containing compound (B)), with a result that the viscosity is extremely lowered (that is, the coating workability is improved). When this mixed paint is applied onto a target, the acetoacetyl group-containing compound (B) is evaporated, so that zinc ions are isolated from the acetoacetyl group-containing compound (B) to generate free zinc ions. Then, the zinc ions reacts again with the rosin and/or rosin derivative to form a rosin zinc salt, while an acid portion of the polyester (A) derived from the first component also react with the zinc ions to form a zinc salt (hydrolyzable metallic salt crosslinked product). Thereby, the mixed paint applied onto the target is dried, to form an antifouling coating film.

The content of the rosin and/or rosin derivative (D) is preferably 0.5 to 300 parts by weight, more preferably 0.5 to 200 parts by weight, most preferably 0.5 to 150 parts by weight relative to 100 parts by weight of the solid content of the reaction mixture (A). If the content is less than 0.5 parts by weight, the viscosity of the antifouling paint composition tends to be increased. If the content exceeds 300 parts by weight, the coating film properties tend to be poor. For example, coating film cracking occurs.

<(E) Antifouling Agent>

The antifouling paint composition of the present invention may further contain an antifouling agent excluding copper and copper compounds typified by cuprous oxide (hereinafter referred to as the "antifouling agent (E)"). The antifouling agent (E) may be any of organic or inorganic antifouling agents, and may be metal pyrithiones such as zinc pyrithione; 4,5-dichloro-2-n-octyl-4-isothiazoline-3-one; 2-methylthio-4-t-butylamino-6-cyclopropylamino-s-triazine; N,N'-dimethyl-N'-tolyl-(N-fluorodichloromethylthio) sulfamide; pyridine-triphenylborane; 2-(p-chlorophenyl)-3-cyano-4-bromo-5-trifluoromethylpyrrole; or medetomidine (system name: (±)4-[1-(2,3-dimethylphenyl)ethyl]-1H-imidazole).

In view of antifouling properties under static conditions, as the antifouling agent (E), preferred are zinc pyrithione; 4,5-dichloro-2-n-octyl-4-isothiazoline-3-one; 2-methylthio-4-t-butylamino-6-cyclopropylamino-s-triazine; 2-(p-chlorophenyl)-3-cyano-4-bromo-5-trifluoromethyl pyrrole; and medetomidine (system name: (±)4-[1-(2,3-dimethylphenyl) ethyl]-1H-imidazole). The antifouling agent (E) may be contained either in the first component or in the second component, or may be added to a mixture obtained by mixing the first component with the second component. Since adding the antifouling agent (E) to the first component could cause abrupt precipitation (deposition) during storage due to its reaction with the polyester resin (a3), the antifouling agent (E) is contained preferably in the second component.

In the antifouling paint composition of the present embodiment, the content of the antifouling agent (E) is preferably 5 to 600 parts by weight, more preferably 10 to 500 parts by weight, relative to 100 parts by weight of the solid content of the reaction mixture (A) (or 100 parts by weight of the reaction mixture (A)).

From the viewpoint of improving the coating film hardness (strength) while suppressing the increase in the viscosity of the antifouling paint composition, the antifouling agent (E) is preferably zinc pyrithione. The content of zinc pyrithione is preferably 0.5 to 300 parts by weight, more preferably 1 to 200 parts by weight, most preferably 10 to 200 parts by weight, relative to 100 parts by weight of the solid content of the reaction mixture (A) (or 100 parts by weight of the reaction mixture (A)).

<(F) Other Additives>

The antifouling paint composition of the present invention may contain at least one additive selected from the group consisting of a plasticizer (f1), a (meth) acrylic metal salt-based copolymer (f2), an extender pigment (f3), a pigment dispersant (f4), a color pigment (f5), an anti-sagging agent (f6), an anti-settling agent (f7) and a dehydrating agent (f8). These components may be contained either in the first component or in the second component, or added to a mixture obtained by mixing the first component with the second component.

The plasticizer (f1), the (meth)acrylic metal salt-based copolymer (f2), the extender pigment (f3) (excluding zinc oxide), the pigment dispersant (f4), the color pigment (f5), the anti-sagging agent (f6), the anti-settling agent (f7) and the dehydrating agent (f8) are described hereinafter.

(f1) Plasticizer

Examples of the plasticizer (f1) include chlorinated paraffin, petroleum resins, ketone resins, TCP (tricresyl phosphate), polyvinyl ethyl ether, dialkyl phthalate and (meth)acrylic polymers. It is preferred for the antifouling paint

composition of the present invention to contain the plasticizer (f1) because of improving anti-cracking property of the coating film (antifouling coating film) formed from the antifouling paint composition.

The chlorinated paraffin (paraffin chloride) may be a straight chained one or a branched chained one, and may be a liquid or a solid (powder) at room temperature, and preferably has an average number of carbon atoms of normally 8 to 30, more preferably 10 to 26. The chlorinated paraffin normally has a number-average molecular weight of 200 to 1200, more preferably 300 to 1100; normally has a viscosity of 1 or more (poise/25°C), more preferably 1.2 or more (poise/25°C); and normally has a specific gravity of 1.05 to 1.80/25°C, more preferably 1.10 to 1.70/25°C. By using the chlorinated paraffin having such number of carbon atoms, a coating film formed from the antifouling paint composition hardly has fissures (cracks) and peelings.

If the number of carbon atoms of the chlorinated paraffin is less than 8, the crack-inhibiting effect may be insufficient. If the number of carbon atoms of the chlorinated paraffin is more than 30, the resultant coating film surface may have deteriorated consumption property (renewability) and antifouling properties.

The chlorination rate of the chlorinated paraffin (chlorine content) is normally 35 to 75%, preferably 35 to 65%. With use of the chlorinated paraffin having such a chlorination rate, an antifouling paint composition that forms a coating film with fewer fissures (cracks) and peelings can be produced. Examples of such a chlorinated paraffin include "TOYOPARAX 150" and "TOYOPARAX A-70" manufactured by TOSOH CORPORATION.

Specific examples of the petroleum resins include C5-based, C9-based, styrenic and dicyclopentadiene-based resins, and their hydrogenated substances, with commercially available products thereof including "Quintone 1500" and "Quintone 1700" manufactured by ZEON CORPORATION.

The content of the plasticizer (f1) is preferably 0.1 to 300 parts by weight, more preferably 0.1 to 200 parts by weight, most preferably 0.1 to 150 parts by weight, relative to 100 parts by weight of the solid content of the reaction mixture (A) (or 100 parts by weight of the reaction mixture (A)).

(f2)(Meth)acrylic Acid Metal Salt Copolymer

A polymerizable unsaturated monomer that forms the (meth)acrylic acid metal salt copolymer (f2) is, for example, a metal di(meth)acrylate, and is preferably a metal-containing monomer (f2) represented by the following formula (1).

$$R^1\text{-COO-M-}L_n \qquad (1)$$

wherein in the formula (1), $R^1$ represents $CH_2=C(CH_3)$-, $CH_2=CH$-, HOOC-CH=CH-, or HOOC-CH=C($CH_3$)-, wherein -COOH represents an unsaturated bond-containing organic group that may form a metal salt or ester; M represents a metal atom; L represents an organic acid residue represented by -OCOR$^2$ wherein $R^2$ represents an alkyl group, a cycloalkyl group, an aromatic hydrocarbon group that may have a substituent, or an aralkyl group; and n represents a value that is valence number of the metal M minus 1.

Specific examples of this polymerizable unsaturated monomer include magnesium acrylate:$(CH_2=CH\text{-}COO)_2Mg$, magnesium methacrylate: $(CH_2=C\,(CH_3)\,COO)_2Mg$, zinc acrylate: $(CH_2=CHCOO)_2Zn$, zinc methacrylate: $(CH_2=C(CH_3)COO)_2Zn$, copper acrylate: $(CH_2=CHCOO)_2Cu$, and copper methacrylate: $(CH_2=C(CH_3)COO)_2Cu$. One kind or more of these may be selected. With respect to such a metal di(meth)acrylate, the metal preferably contains a metal selected from the group consisting of zinc, copper, calcium, aluminum and magnesium; more preferably a metal selected from zinc, copper and magnesium.

The number-average molecular weight of the (meth)acrylic acid metal salt copolymer (f2) is preferably 1000 to 20000, more preferably 1000 to 10000, most preferably 1000 to 3000.

The content of the (meth)acrylic acid metal salt copolymer (f2) is preferably 0.1 to 100 parts by weight, more preferably 0.1 to 80 parts by weight, most preferably 0.1 to 50 parts by weight, relative to 100 parts by weight of the solid content of the reaction mixture (A), from the viewpoint of preventing viscosity increase. When the number-average molecular weight of the (meth)acrylic acid metal salt copolymer (f2) is within the above range, the consumption degree can be effectively adjusted and an antifouling coating film excellent in static antifouling properties tend to be formed. If the number-average molecular weight of the (meth) acrylic acid metal salt copolymer (f2) exceeds the above range, there is a strong trend for the coating viscosity to increase and for the consumption degree of the resultant antifouling coating film to be suppressed, and static antifouling properties tend to decrease. If the molecular weight of the (meth)acrylic acid metal salt copolymer (f2) is smaller than the above range, the coating film properties such as anti-cracking property tends to decrease even if the antifouling properties of the resultant antifouling coating film is maintained at a high level. The (meth) acrylic acid metal salt copolymer (f2) is contained preferably in the first component from the viewpoint of storage stability.

The content of the (meth)acrylic acid metal salt copolymer (f2) is preferably 0.1 to 300 parts by weight, more preferably 0.1 to 200 parts by weight, most preferably 0.1 to 150 parts by weight, relative to 100 parts by weight of the solid content of the reaction mixture (A) (or 100 parts by weight of the reaction mixture (A)).

(f3) Extender Pigment

Examples of the extender pigment (f3) (excluding zinc oxide) include talc, silica, mica, clay, potash feldspar, calcium carbonate also used as an anti-settling agent, kaolin, alumina white, white carbon also used as a delustering agent, aluminum hydroxide, magnesium carbonate, barium carbonate and barium sulfate. Among these, preferred is an extender pigment selected from the group consisting of talc, silica, mica, clay, calcium carbonate, kaolin, barium sulfate and potash feldspar. The extender pigment is a pigment with a low refractive index, and becomes transparent when mixed with oil or varnish to avoid concealing of the coated surface. It is preferable for the antifouling paint composition of the present invention to contain the extender pigment (f3) from the viewpoint of improving the coating film properties such as anti-cracking property.

The content of the pigment extenders (f3) is preferably 0.1 to 500 parts by weight, more preferably 50 to 300 parts by weight, relative to 100 parts by weight of the solid content of the reaction mixture (A) (or 100 parts by weight of the reaction mixture (A)).

(f4) Pigment Dispersant

Various known organic or inorganic dispersants may be used as the pigment dispersant (f4). Examples of the organic pigment dispersants include aliphatic amines and organic acids ("Duomeen TDO" manufactured by Lion Co., Ltd., "DISPERBYK-101" manufactured by BYK CHEMIE).

The content of the pigment dispersant (f4) is preferably 0.01 to 100 parts by weight, more preferably 0.01 to 50 parts by weight, relative to 100 parts by weight of the solid content of the reaction mixture (A) (or 100 parts by weight of the reaction mixture (A)).

(f5) Color Pigment

Various known organic or inorganic pigments may be used as the color pigment (f5) (excluding zinc oxide). Examples of the organic pigments include carbon blacks, naphthol red and phthalocyanine blue. Examples of the inorganic pigments include red iron oxide, baryta powder, titanium white and yellow iron oxide. Various coloring agents such as dyes may also be contained. The inclusion of the color pigments (f4) in the antifouling paint composition of the present embodiment is preferable because the hue of the antifouling coating film formed from the composition can be arbitrarily adjusted. The content of the color pigment (f5) is preferably 0.01 to 100 parts by weight, more preferably 0.01 to 10 parts by weight, relative to 100 parts by weight of the solid content of the reaction mixture (A) (or 100 parts by weight of the reaction mixture (A)).

(f6) Anti-Sagging Agent

Examples of the anti-sagging agent (f6) (also called "antirunning agent") include an amide wax, hydrogenated castor oil-based, polyamide-based, mixtures of both and a synthesized fine silica. Among these, a polyamide wax and a synthesized fine silica are preferred. Examples of the commercially available products include "DISPARLON A630-20XC" manufactured by KUSUMOTO CHEMICALS, CO., LTD. and "ASAT-250F" manufactured by ITO OIL CHEMICALS CO., LTD. The inclusion of the anti-sagging agent (f6) in the antifouling paint composition of the present embodiment is preferable because properties such as anti-sagging property of the mixed paint upon coating procedure can be adjusted. The content of the anti-sagging agent (f6) is preferably 0.1 to 100 parts by weight, more preferably 0.1 to 50 parts by weight, relative to 100 parts by weight of the solid content of the reaction mixture (A) (or 100 parts by weight of the reaction mixture (A)).

(f7) Anti-Settling Agent

Examples of the anti-settling agent (f7) include amine salts of Al, Ca or Zn of organoclay, polyethylene wax, and oxidized polyethylene-based wax. Among these, the oxidized polyethylene-based wax is preferred. Examples of commercially available products include "DISPARLON 4200-20X" manufactured by KUSUMOTO CHEMICALS, Co., LTD. The inclusion of the anti-settling agents (f7) in the antifouling paint composition of the present embodiment is preferable because of preventing the precipitation of solvent-insoluble matters during storage and improving stirring properties.

The content of the anti-settling agent (f7) is preferably 0.1 to 100 parts by weight, more preferably 0.1 to 50 parts by weight, relative to 100 parts by weight of the solid content of the reaction mixture (A) (or 100 parts by weight of the reaction mixture (A)).

(f8) Dehydrating Agent

Examples of the dehydrating agent (f8) include anhydrite gypsum ($CaSO_4$), calcined gypsum, synthetic zeolite-based absorbents (product name: Molecular Sieve 3A, 4A, 5A, 13X, etc.), and inorganic dehydrating agents such as ethyl silicate. Of these, gypsum and calcined gypsum are particularly preferred because of their high dehydrating effect. The dehydrating agent further improves storage stability and adhesion of the antifouling paint composition. The inorganic dehydrating agents may be used singly or in combination of two or more kinds.
The content of the dehydrating agent (f8) is preferably 0.1 to 100 parts by weight, more preferably 0.1 to 50 parts by weight, most preferably 0.1 to 20 parts by weight, relative to 100 parts by weight of the solid content of the reaction mixture (A).

<(G) Organic Solvent>

The antifouling paint composition of the present embodiment may further contain an organic solvent (G) (excluding the acetoacetyl group-containing compound (B)), provided that the content of an organic solvent which is VOC (Volatile Organic Component) in the organic solvent (G) and of the acetoacetyl group-containing compound (B), i.e., the content of VOC in the paint composition, is 400 g or less, preferably 390 g or less, more preferably 380 g or less, per 1 L of the two-component hydrolyzable antifouling paint composition of the present invention. By setting the content of the VOC within this range, environmental load and adverse effects to human body can be reduced. The content of the VOC is a value measured under measurement conditions set forth in Examples.
The volatile organic compound (VOC) herein represents an organic compound substance having a boiling point (normal pressure) of 50 to 260°C (volatile organic compound (VOC) defined by WHO) and an organic compound substance having a boiling point (normal pressure) of lower than 50°C (high volatile organic compound (VVOC) defined by WHO).
The organic solvent (G) may be various known solvents with a wide range of boiling points, with specific examples thereof including:

aliphatic solvents such as terpene and hexane;
aromatic solvents such as toluene and xylene;
alcohol solvents such as methanol, isopropyl alcohol, n-butyl alcohol and isobutyl alcohol;
ester solvents such as ethyl acetate and butyl acetate;
ketone solvents such as methyl ethyl ketone, methyl isobutyl ketone and methyl amyl ketone; and
ether or ether ester solvents such as ethylene glycol monomethyl ether, ethylene glycol monobutyl ether, propylene glycol monomethyl ether and propylene glycol monomethyl ether acetate.

Among these, xylene, methyl isobutyl ketone and propylene glycol monomethyl ether are preferred. These solvents may be used singly, or in combination of two or more kinds.
For example, the organic solvent (G) may be contained in the first component to dilute the reaction mixture (A). Examples of the organic solvent (G) for diluting the reaction mixture (A) include aromatic hydrocarbons, aliphatic hydrocarbons, esters, ketones and alcohols, with more specific examples thereof including aromatic hydrocarbons such as toluene and xylene; aliphatic hydrocarbons such as hexane; esters such as ethyl acetate and butyl acetate; ketones such as methyl ethyl ketone and methyl isobutyl; and alcohols such as methanol, butanol and isobutanol. These organic solvents may be used singly, or in combination of two or more kinds. In view of the relatively high acid value of the solid content of the reaction mixture (A), in order to satisfy both low viscosity and low VOC, using polar organic solvents such as esters, ketones and alcohols is more favored than using aromatic hydrocarbons. Using ester or ketone organic solvents is further preferred because alcohols cause an alcoholysis, which may lower the resin viscosity.

Production method of two-component hydrolyzable antifouling paint composition

The two-component antifouling paint composition comprising two liquids of the first component and the second component is produced through preparing each of the first component and the second component.
For example, the first component is prepared by carrying out the following step (1) (see the item "Reaction Mixture (A)" for detail).
Step (1): polycondensing the acid component (a1) and the polyhydric alcohol component (a2) to prepare the reaction mixture (A) containing the polyester resin (a3), and then mixing the reaction mixture (A) with the acetoacetyl group-containing compound (B) to prepare the first component.
The second component is prepared by mixing zinc oxide (C) and optional components as needed.
The two-component antifouling paint composition of the present invention thus produced is composed of the

two liquids of the first component and the second component. In forming a coating film on a surface of a substrate, the first component is mixed with the second component by using known stirring/mixing means to prepare a mixed paint. Examples of the known stirring/mixing means include a high-speed disperser, a sand grind mill, a basket mill, a ball mill, a triple roll mill, a Ross mixer, a planetary mixer and a universal Shinagawa agitator.

[Production method of antifouling coating film and antifouling substrate]

The antifouling coating film of the present invention is formed by mixing the first component with the second component of the two-component hydrolyzable antifouling paint composition of the present invention and hardening the mixture, and can exhibit superior antifouling properties and superior mechanical strength for a long period of time.

The production method of the antifouling substrate of the present invention employs this antifouling paint composition, and thus can produce an antifouling substrate that exhibits superior mechanical strength and antifouling properties for a long period of time, under the conditions of a low VOC and good coating workability.

The production method of the antifouling substrate of the present invention comprises coating or impregnating a substrate (target) with the two-component hydrolyzable antifouling paint composition of the present invention, and then hardening the composition to form an antifouling coating film.

The substrate on which the antifouling coating film is formed, which is not particularly limited, is preferably any of an underwater structure, a ship, a fishing net and a fishing gear. For example, by applying the above antifouling paint composition for one or more times in accordance with a common procedure to the surfaces of various products including underwater structures such as water inlet and outlets for thermal and nuclear power plants, coastal roads, submarine tunnels, harbor facilities, sludge diffusion-preventing films for various marine civil engineering works such as canals and waterway, and ships and fishery materials such as ropes, fishing nets, fishing gears, floats and buoys, and the like, excellent antifouling properties are exhibited, and the antifouling agent components can be released for a long period of time. Even when the antifouling film is formed by thickly coating, underwater structures and the like having the antifouling film with appropriate flexibility and excellent anti-cracking property can be obtained.

That is, the antifouling coating film formed by applying the two-component hydrolyzable antifouling paint composition of the present invention onto surfaces of various substrates and then hardening the composition can exhibit such superior antifouling properties as to prevent the attachment of aquatic organisms such as sea lettuce, barnacle, green laver, serpula, oyster and bryozoan for a long period of time continuously. Particularly, even when the materials of ships or the like that contact with sea water are FRP, steel, wood, aluminum alloy or the like, the formation of the antifouling coating film of the present invention on the surfaces of these materials can appropriately prevent the attachment of the aquatic organisms. For example, the application of the antifouling paint composition of the present invention on the surface of an undersea structure to form the antifouling coating film can prevent the attachment of aquatic organisms for a long period of time and allows for maintaining the functions of the structure for a long period of time. In the case where the antifouling coating film is formed on a fishing net, there is little concern about environmental pollution, and the clogging of the meshes of the fishing net due to the attachment of aquatic organisms can be prevented.

The mixed paint, for example, may be applied directly on a fishing net, and may be applied to a ship or of underwater structure surface which has been previously coated with a base material such as an anticorrosive agent or a primer. The surfaces of ships, especially FRP ships, or underwater structures, on which a conventional antifouling paint has been already applied or the antifouling coating film of the present invention has been already formed, may be over-coated with the two-component hydrolyzable antifouling paint composition of the present invention for repairing purpose so that a new antifouling coating film may be formed. The thickness of the antifouling coating film thus formed on the surface of a ship or an underwater structure, although not particularly limited, is for example, about 30 to 250 μm per one coating. Since the antifouling coating film of the present invention obtained as described above results from hardening the antifouling paint composition of the present invention, environmental pollution is hardly a concern and long-term antifouling properties are excellent against the attachment of a wide variety of organisms onto ships and underwater structures.

As described above, according to the present invention, there is provided a two-component hydrolyzable antifouling paint composition capable of forming an antifouling coating film suitable for an ocean vessel that has excellent antifouling properties with low environmental load; is consumed evenly at a constant rate for a long period of time (has excellent uniform consumption property); and maintains excellent antifouling performance for a long period of time (is excellent in long-term maintainability of antifouling properties). The present invention also provides an antifouling coating film; and a ship, an underwater structure, a fishing gear or a fishing net coated with such an antifouling paint film.

## EXAMPLES

The present invention will be described in greater detail based on Examples and Comparative Examples, with the understanding that the Examples are in no way limitative on the invention. The "part(s)" and "%" in Examples and Comparative Examples refer to "part (s) by weight" and "weight %", respectively. In Tables, a (meth) acrylic acid metal salt copolymer is referred to also as a polymeric metal salt derived from a (meth)acrylic acid structure.

Some of the raw materials used in preparing antifouling paint compositions of Examples and Comparative Examples are shown in Table 10.

<Production of polyester resin solution>

[Production Example 1: Production of polyester resin solution (a-1)]

Into a 2 L four-necked flask, 371.0 parts of isophthalic acid, 427.1 parts of sebacic acid, 238.2 parts of neopentyl glycol and 89.0 parts of ethylene glycol were added, and reaction (esterification reaction) was conducted at 220°C for 5 hours in the presence of nitrogen gas. During the reaction, generated water was removed by reflux dehydration. The acid value was measured by KOH titration method and the hydroxyl value was measured by acetylation method. When the solid content acid value and the solid content hydroxyl value in the reaction liquid reached 100 mgKOH/g and 30 mgKOH/g, respectively, the reaction was suspended. The reaction liquid was cooled, and then diluted with methyl isobutyl ketone, to obtain a resin composition (polyester resin solution (a-1)) having an acid value of 70 mgKOH/g, a hydroxyl value of 21 mgKOH/g and a solid content of 70.3%. As shown in Table 1, the solid content acid value of the resin composition was 100 mgKOH/g, and the solid content hydroxyl value of the resin composition was 30 mgKOH/g. The viscosity (25°C) of the resin composition was 320 m Pa·s. The resin composition contained a polyester resin with a weight-average molecular weight of 1,800 and a number-average molecular weight of 860. The molecular weights (Mw, Mn) and viscosity were measured in accordance with the "Evaluation of properties" described later.

[Production Example 2: Production of polyester resin solution (a-2)]

A resin composition (polyester resin solution (a-2)) having an acid value of 157.4 mgKOH/g, a hydroxyl value of 14.3 mgKOH/g and a solid content of 69.9% was obtained in the same manner as in Production Example 1 except that the amounts of raw materials were changed as shown in Table 1, followed by evaluating various properties in the same manner as in Production Example 1.

As shown in Table 1, the solid content acid value of the resin composition was 110 mgKOH/g, and the solid content hydroxyl value of the resin composition was 10 mgKOH/g. The viscosity (25°C) of the resin composition was 360 mPa·s. The resin composition contained a polyester resin with a weight-average molecular weight of 2,200 and a number-average molecular weight of 920.

[Production Example 3: Production of polyester resin solution (a-3)]

Into a 2 L four-necked flask, 225.0 parts of isophthalic acid, 366.0 parts of sebacic acid, 205.0 parts of neopentyl glycol, 131.0 parts of ethylene glycol, and 86.0 parts of benzoic acids were added, and reaction (esterification reaction) was conducted at 220°C for 6 hours in presence of nitrogen gas. Generated water was removed by reflux dehydration. The acid value was measured by KOH titration method and the hydroxyl value was measured by acetylation method. When the solid content acid value and the solid content hydroxyl value in the reaction liquid reached 43 mgKOH/g and 115 mg/KOH, respectively, the reaction was suspended. The mixture was then cooled to 170°C. 108.0 parts by weight of trimellitic anhydride was added thereto, and addition reaction was conducted with temperature kept for 2 hours. When the solid content acid value and the solid content hydroxyl value in the reaction liquid reached 90 mgKOH/g and 60 mg/KOH, respectively, the reaction was terminated. The reaction liquid was cooled, and then diluted with methyl isobutyl ketone, to obtain a resin composition (polyester resin solution (a-3)) having an acid value of 128.6 mgKOH/g, a hydroxyl value of 71.4 mgKOH/g and a nonvolatile content of 70%, and various properties were evaluated in the same manner as in Production Example 1.

As shown in Table 1, the solid content acid value of the resin composition was 90 mgKOH/g, and the solid content hydroxyl value of the resin composition was 50 mgKOH/g. The viscosity (25°C) of the resin composition was 345 mPa·s. The resin composition contained a polyester resin with a weight-average molecular weight of 2,060 and a number-average molecular weight of 1,000.

Table 1

| | | Production Example 1 | Production Example 2 | Production Example 3 |
|---|---|---|---|---|
| Polyester resin (A) solution | | a-1 | a-2 | a-3 |
| Monomer composition | Ethylene glycol | 89 | 79 | 131 |
| | Neopentyl glycol | 238.2 | 235 | 205 |
| | Trimethylolpropane | - | - | - |
| | Sebacic acid | 427.1 | 452 | 366 |
| | Phthalic acid | - | - | - |
| | Isophthalic acid | 371 | 358.9 | 225 |
| | Terephthalic acid | - | - | - |
| | Benzoic acid | - | - | 86 |
| | Trimellitic anhydride | - | - | 108 |
| Non-volatile content | | 70.3 | 69.9 | 70 |
| Resin properties | Viscosity (mPa·s) | 320 | 360 | 345 |
| | Solid content acid value (mgKOH/g) | 100 | 110 | 90 |
| | Solid content hydroxyl value (mgKOH/g) | 30 | 10 | 50 |
| | Number-average molecular weight (Mn) | 860 | 920 | 1000 |
| | Weight-average molecular weight (Mw) | 1800 | 2200 | 2060 |

<Production of (meth)acrylic acid metal salt copolymer>

[Production Example 4: Preparation of mixture solution A]

Into a four-necked flask equipped with a condenser, a thermometer, a dropping funnel and a stirrer, 85.4 parts (0.95 mol) of propylene glycol methyl ether (PGM) and 40.7 parts (0.5 mol) of zinc oxide were charged, and the mixture was heated to 75°C with stirring. Then, from the dropping funnel, a mixture composed of 45.1 parts (0.5 mol) of methacrylic acid (MMA), 36.1 parts (0.5 mol) of acrylic acid (AA) and 5 parts (0.28 mol) of water was dropped at a constant rate over 3 hours. Upon completion of the dropping, the reaction solution changed its state from a milky white state to a transparent state. After further stirring for 2 hours, 36 parts (0.4 mol) of propylene glycol methyl ether (PGM) was added thereto, so that a transparent mixture solution A containing a metal-containing monomer (a-4) was obtained. The solid content of the mixture solution thus obtained (amount corresponding to a solid content in the case of copolymerizing the monomer mixture A containing the metal-containing monomer) was 44.8 weight%.

The compounding ratio (molar ratio) of the charged monomers, and the content (%) of volatile components and the content of solid components in the metal-containing monomer mixture solution are shown in Table 2.

[Production Example 5: Preparation of mixture solution (B)]

The same procedure as that of Production Example 4 was carried out except that the compounding components were changed to those shown in Table 2, so that a mixture solution (B) containing a metal-containing monomer (a-5) was prepared. The solid content of the mixture solution (B) obtained (an amount corresponding to a solid content in the case of copolymerizing the monomer mixture B containing the metal-containing monomer) was 44.9 weight%.

The compounding ratio (molar ratio) of the charged monomers, and the content (%) of volatile components i and the content of solid components in the metal-containing monomer mixture solution are shown in Table 2.

Table 2

| | Charged amount (molar ratio) | | | | | | Content (%) of volatile component in metal-containing monomer mixture | | | | Solid content (%) |
|---|---|---|---|---|---|---|---|---|---|---|---|
| | MMA | AA | ZnO | MgO | CuO | water | PGM | N-BuOH | xylene | water | |
| Production Example 4 (A) | 0.5 | 0.5 | 0.5 | | | 0.28 | 53.2 | | | 2 | 44.8 |
| Production Example 5 (B) | 0.5 | 0.5 | 0.5 | | | 0.28 | | 9.9 | 45.2 | 2 | 44.9 |

[Production Example 6: Preparation of (meth)acrylic acid metal salt copolymer (a-6)]

Into a four-necked flask equipped with a condenser, a thermometer, a dropping funnel and a stirrer, 15 parts of propylene glycol methyl ether, 57 parts of xylene and 4 parts of ethyl acrylate were charged, and the mixture was heated to 100°C with stirring. Then, from the dropping funnel, a transparent mixture composed of 1 part of methyl methacrylate, 66.2 parts of ethyl acrylate, 5.4 parts of 2-methoxyethyl acrylate (2-MEA), 52 parts of the "mixture solution A" obtained in Production Example 4, 10 parts of xylene, 1 part of a chain transfer agent ("Nofmer MSD" manufactured by NOF Corporation), 2.5 parts of AIBN (azobis isobutyronitrile manufactured by Japan Hydrazine Company, Inc.) and 7 parts of AMBN (azobis methylbutyronitrile manufactured by Japan Hydrazine Company, Inc.), was dropped over 6 hours at a constant rate. After the completion of the dropping, 0.5 parts of t-butyl peroctoate (TBPO) and 7 parts of xylene were dropped over 30 minutes. The mixture was further stirred for 1 hour and 30 minutes. Then, 4.4 parts of xylene was added. This procedure provided a pale yellow transparent resin solution ((meth)acrylic acid metal salt copolymer resin solution (a-6)) containing a (meth) acrylic acid metal salt copolymer (a-6) having no insoluble matters.

Various properties of the resulting resin solution (a-6) and the (meth) acrylic acid metal salt copolymer (a-6) were measured in accordance with the following "Evaluation of properties 1".

The heating residue in the (meth)acrylic acid metal salt copolymer resin solution (a-6) was 45.6%. In the resin solution (a-6), the Gardner viscosity was "-Y", and the solution contained a (meth)acrylic acid metal salt copolymer having a number-average molecular weight (Mn) of 1,950 and a weight-average molecular weight (Mw) of 5,200. Here, the compounding compositions used in preparing the (meth) acrylic acid metal salt copolymer (a-6) and various properties, etc. are shown in Table 3.

[Production Example 7: Preparation of (meth)acrylic acid metal salt copolymer (a-7)]

The same procedure as that of Production Example 6 was carried out except that the compounding components were changed as shown in Table 3, to prepare a resin solution ((meth)acrylic acid metal salt copolymer resin solution (a-7)) containing a (meth)acrylic acid metal salt copolymer (a-7).

The solid content in the resulting (meth) acrylic acid metal salt copolymer resin solution (a-7) and the compounding compositions used in preparing the (meth) acrylic acid metal salt copolymer (a-7), and various properties, etc. are shown in Table 3.

Table 3

| Production Examples of polymeric metal salt derived from (meth)acrylic acid structure | | | |
|---|---|---|---|
| | | Production Example 6 | Production Example 7 |
| Polymeric metal salt derived from (meth)acrylic acid structure | | a-6 | a-7 |
| Metal-containing monomer mixture solution | A (Production Example 4) | 52 | |
| | B (Production Example 5) | | 37.8 |

(continued)

| Production Examples of polymeric metal salt derived from (meth)acrylic acid structure | | | |
|---|---|---|---|
| | | Production Example 6 | Production Example 7 |
| Polymeric metal salt derived from (meth)acrylic acid structure | | a-6 | a-7 |
| Copolymerization Monomer | MMA | 1 | 18 |
| | EA | 66.2 | 65 |
| | 2-MEA | 5.4 | |
| Initiator | AIBN | 2.5 | 2.5 |
| | AMBN | 7 | 7 |
| | TBPO | 0.5 | 0.5 |
| Chain transfer agent | Nofmer MSD | 1 | 1 |
| Properties | Gardner viscosity | -Y | +Y |
| | Solid content (%) | 45.6 | 46.2 |
| | Molecular weight (Mn) | 1950 | 2200 |
| | Molecular weight (Mn) | 5200 | 5600 |

<Preparation of two-component hydrolyzable antifouling paint composition>

[Example 1]

As a second component of the antifouling paint composition, a paste (1) was prepared by the following procedure.

First, into a 1000 ml plastic container, xylene solvent (8 parts), PGM-AC (1 part), rosin (5.5 parts), and chlorinated paraffin (2 parts) were added, and stirred with a paint shaker until dissolved homogenously. Next, a Disperbyk-101 (BYK-101) (0.5 part) was added and stirred with a paint shaker for 5 minutes. Then, talc FC-1 (8 parts), zinc oxide (20 parts), potassium feldspar (5 parts), NOVAPERM RED F5RK (0.5 part), red iron oxide Gekko BB (3 parts), titanium white R-5N (3 parts), calcined gypsum FT-2 (1 part), zinc pyrithione (zinc omadine) (10 parts), Sea-Nine 211 (4,5-dichloro-2-n-octyl-4-isothiazoline-3-one (30% solution)) (10 parts), and an anti-settling agent Dis4200-20X (1 part) were added, and then dispersed for 1 hour after addition of 200 parts of glass beads. In addition, an anti-sagging agent Dis630-20X (1.5 parts) was added, and dispersion was conducted for further 20 minutes. The mixture was then filtered with an 80 mesh filter screen to provide a paste (1) serving as the second component.

Next, a two-component antifouling paint composition was prepared, which was composed of two liquids that were 20 parts of the first component and 80 parts by weight of the second component, which was the paste (1), the first component being prepared by mixing 18 parts of the polyester resin solution (a-1) obtained in Production Example 1 and 2 parts of acetylacetone and stirring these components until they were homogenous.

20 parts of the first component was mixed with 80 parts of the second component evenly mixed using a disper, and the mixture was applied to various test plates. Various properties of the mixed paint thus prepared and of coating film formed therefrom were measured and evaluated in accordance with the following "Evaluation of properties".

[Examples 2 to 12]

The same procedure as that of Example 1 was carried out except that the compounding components and the compounding amounts of the first and second components were changed as shown in Table 4, so that an antifouling paint composition was prepared. Then, the resulting antifouling paint composition was applied onto the surface of various test plates. Various properties of the mixed paint thus prepared and of coating film formed therefrom were measured and evaluated.

[Comparative Examples 1 to 16]

The same procedure as that of Example 1 was carried out except that the compounding components and the compounding amounts of the first and second components were changed as shown in Tables 5 and 6, to prepare an

antifouling paint composition. Then, the resulting antifouling paint composition was applied onto the surface of various test plates. Various properties of the mixed paint thus prepared and of coating film formed therefrom were measured and evaluated.

Table 4

| | | Examples | | | | | |
|---|---|---|---|---|---|---|---|
| | | 1 | 2 | 3 | 4 | 5 | 6 |
| First Component | Polyester resin solution (a-1) | 18 | - | - | 18 | 18 | 18 |
| | Polyester resin solution (a-2) | - | 18 | - | - | - | - |
| | Polyester resin solution (a-3) | - | - | 18 | - | - | - |
| | (Meth)acrylic acid metal salt copolymer resin solution (a-6) | - | - | - | - | - | - |
| | (Meth)acrylic acid metal salt copolymer resin solution (a-7) | - | - | - | - | - | - |
| | Acetylacetone | 2 | 2 | 2 | - | 2 | 2 |
| | Acetoacetylethyl methacrylate | - | - | - | 2 | | |
| | Subtotal | 20 | 20 | 20 | 20 | 20 | 20 |
| Second component | Xylene | 8 | 8 | 8 | 8 | 8 | 8 |
| | PGM-AC | 1 | 1 | 1 | 1 | 1 | 1 |
| | Rosin | 5.5 | 5.5 | 5.5 | 5.5 | 5.5 | 5.5 |
| | TOYOPARAX 150 | 2 | 2 | 2 | 2 | 2 | 2 |
| | BYK-101 | 0.5 | 0.5 | 0.5 | 0.5 | 0.5 | 0.5 |
| | Zinc oxide | 20 | 20 | 20 | 20 | 20 | 20 |
| | Talc FC-1 | 8 | 8 | 8 | 8 | 8 | 8 |
| | Potash feldspar | 5 | 5 | 5 | 5 | 5 | 5 |
| | Zinc Omadine | 10 | 10 | 10 | 10 | 7 | 7 |
| | Calcined gypsum FT-2 | 1 | 1 | 1 | 1 | 1 | 1 |
| | Dis4200-20X (Anti-settling agent) | 1 | 1 | 1 | 1 | 1 | 1 |
| | 4,5-dichloro-2-n-octyl-4-isothiazoline-3-one | 10 | 10 | 10 | 10 | 10 | 10 |
| | 2-methylthio-4-t-butylamino-6-cyclopropyl amino-s-triazine | - | - | - | - | 3 | - |
| | N,N'-dimethyl-N'-tolyl-(N-fluoro dichloromethylthio)sulfamide | - | - | - | - | - | 3 |
| | Pyridine-triphenylborane | - | - | - | - | - | - |
| | 2-(p-chlorophenyl)-3-cyano-4-bromo-5-trifluoromethyl pyrrole | - | - | - | - | - | - |
| | Medetomidine | - | - | - | - | - | - |
| | Red iron oxide Gekko BB | 3 | 3 | 3 | 3 | 3 | 3 |
| | Organic red pigment (Novaperm Red F5RK) | 0.5 | 0.5 | 0.5 | 0.5 | 0.5 | 0.5 |
| | Titanium white R-5N | 3 | 3 | 3 | 3 | 3 | 3 |
| | Dis630-20XC (Anti-sagging agent) | 1.5 | 1.5 | 1.5 | 1.5 | 1.5 | 1.5 |
| | Subtotal | 80 | 80 | 80 | 80 | 80 | 80 |
| | Total | 100 | 100 | 100 | 100 | 100 | 100 |
| VOC(g/L) | | 380 | 380 | 380 | 380 | 376 | 379 |
| Specific gravity | | 1.49 | 1.49 | 1.49 | 1.49 | 1.48 | 1.49 |
| Heating residue (weight%) | | 74.4 | 74.4 | 74.4 | 74.4 | 74.4 | 74.4 |

PGM-AC: Propylene glycol monomethyl ether acetate

Table 4 (Continuation)

| | | Examples | | | | | |
|---|---|---|---|---|---|---|---|
| | | 7 | 8 | 9 | 10 | 11 | 12 |
| First Component | Polyester resin solution (a-1) | 18 | 18 | 18 | 17 | 17 | 16 |
| | Polyester resin solution (a-2) | - | - | - | - | - | - |
| | Polyester resin solution (a-3) | - | - | - | - | - | - |
| | (Meth)acrylic acid metal salt copolymer resin solution (a-6) | - | - | - | 1 | - | - |
| | (Meth)acrylic acid metal salt copolymer resin solution (a-7) | - | - | - | - | 1 | 2 |
| | Acetylacetone | 2 | 2 | 2 | 2 | 2 | 2 |
| | Acetoacetylethyl methacrylate | - | - | - | - | - | - |
| | Subtotal | 20 | 20 | 20 | 20 | 20 | 20 |
| Second component | Xylene | 8 | 8 | 8 | 8 | 8 | 8 |
| | PGM-AC | 1 | 1 | 1 | 1 | 1 | 1 |
| | Rosin | 5.5 | 5.5 | 5.5 | 5.5 | 5.5 | 5.5 |
| | TOYOPARAX 150 | 2 | 2 | 2 | 2 | 2 | 2 |
| | BYK-101 | 0.5 | 0.5 | 0.5 | 0.5 | 0.5 | 0.5 |
| | Zinc oxide | 20 | 20 | 20 | 20 | 20 | 20 |
| | Talc FC-1 | 8 | 8 | 8 | 8 | 8 | 8 |
| | Potash feldspar | 5 | 5 | 5 | 5 | 5 | 5 |
| | Zinc Omadine | 7 | 7 | 9.9 | 10 | 10 | 10 |
| | Calcined gypsum FT-2 | 1 | 1 | 1 | 1 | 1 | 1 |
| | Dis4200-20X (Anti-settling agent) | 1 | 1 | 1 | 1 | 1 | 1 |
| | 4,5-dichloro-2-n-octyl-4-isothiazoline-3-one | 10 | 10 | 10 | 10 | 10 | 10 |
| | 2-methylthio-4-t-butylamino-6-cyclopropyl amino-s-triazine | - | - | - | - | - | - |
| | N,N'-dimethyl-N'-tolyl-(N-fluoro dichloromethylthio)sulfamide | - | - | - | - | - | - |
| | Pyridine-triphenylborane | 3 | - | - | - | - | - |
| | 2-(p-chlorophenyl)-3-cyano-4-bromo-5-trifluoromethyl pyrrole | - | 3 | - | - | - | - |
| | Medetomidine | - | - | 0.1 | - | - | - |
| | Red iron oxide Gekko BB | 3 | 3 | 3 | 3 | 3 | 3 |
| | Organic red pigment (Novaperm Red F5RK) | 0.5 | 0.5 | 0.5 | 0.5 | 0.5 | 0.5 |
| | Titanium white R-5N | 3 | 3 | 3 | 3 | 3 | 3 |
| | Dis630-20XC (Anti-sagging agent) | 1.5 | 1.5 | 1.5 | 1.5 | 1.5 | 1.5 |
| | Subtotal | 80 | 80 | 80 | 80 | 80 | 80 |
| | Total | 100 | 100 | 100 | 100 | 100 | 100 |
| VOC(g/L) | | 375 | 380 | 381 | 370 | 384 | 388 |
| Specific gravity | | 1.47 | 1.49 | 1.49 | 1.49 | 1.49 | 1.49 |
| Heating residue (weight%) | | 74.4 | 74.4 | 74.4 | 75.1 | 74 | 73.8 |

PGM-AC: Propylene glycol monomethyl ether acetate

Table 5

| | | Comparative Examples | | | | | |
|---|---|---|---|---|---|---|---|
| | | 1 | 2 | 3 | 4 | 5 | 6 |
| First Component | Polyester resin solution (a-1) | 18 | 18 | 18 | 18 | 18 | 18 |
| | Polyester resin solution (a-2) | - | - | - | - | - | - |
| | Polyester resin solution (a-3) | - | - | - | - | - | - |
| | (Meth)acrylic acid metal salt copolymer resin solution (a-6) | - | - | - | - | - | - |
| | (Meth)acrylic acid metal salt copolymer resin solution (a-7) | - | - | - | - | - | - |
| | Xylene | 2 | - | - | - | - | - |
| | n-butanol | - | 2 | - | - | | |
| | Methyl ethyl keton | - | | 2 | - | - | - |
| | Methyl isobutyl keton | - | - | - | 2 | - | - |
| | Diacetyl | - | - | - | - | 2 | - |
| | 2,5-hexanedion | - | - | - | - | - | 2 |
| | Subtotal | 20 | 20 | 20 | 20 | 20 | 20 |
| Second component | Xylene | 8 | 8 | 8 | 8 | 8 | 8 |
| | PGM-AC | 1 | 1 | 1 | 1 | 1 | 1 |
| | Rosin | 5.5 | 5.5 | 5.5 | 5.5 | 5.5 | 5.5 |
| | TOYOPARAX 150 | 2 | 2 | 2 | 2 | 2 | 2 |
| | BYK-101 | 0.5 | 0.5 | 0.5 | 0.5 | 0.5 | 0.5 |
| | Zinc oxide | 20 | 20 | 20 | 20 | 20 | 20 |
| | Talc FC-1 | 8 | 8 | 8 | 8 | 8 | 8 |
| | Potash feldspar | 5 | 5 | 5 | 5 | 5 | 5 |
| | Zinc Omadine | 10 | 10 | 10 | 10 | 10 | 7 |
| | Calcined gypsum FT-2 | 1 | 1 | 1 | 1 | 1 | 1 |
| | Dis4200-20X (Anti-settling agent) | 1 | 1 | 1 | 1 | 1 | 1 |
| | 4,5-dichloro-2-n-octyl-4-isothiazoline-3-one | 10 | 10 | 10 | 10 | 10 | 10 |
| | 2-methylthio-4-t-butylamino-6-cyclopropyl amino-s-triazine | - | - | - | - | - | 3 |
| | N,N'-dimethyl-N'-tolyl-(N-fluoro dichloromethylthio)sulfamide | - | - | - | - | - | - |
| | Pyridine-triphenylborane | - | - | - | - | - | - |
| | 2-(p-chlorophenyl)-3-cyano-4-bromo-5-trifluoromethyl pyrrole | - | - | - | - | - | - |
| | Red iron oxide Gekko BB | 3 | 3 | 3 | 3 | 3 | 3 |
| | Organic red pigment (Novaperm Red F5RK) | 0.5 | 0.5 | 0.5 | 0.5 | 0.5 | 0.5 |
| | Titanium white R-5N | 3 | 3 | 3 | 3 | 3 | 3 |
| | Dis630-20XC (Anti-sagging agent) | 1.5 | 1.5 | 1.5 | 1.5 | 1.5 | 1.5 |
| | Subtotal | 80 | 80 | 80 | 80 | 80 | 80 |
| | Total | 100 | 100 | 100 | 100 | 100 | 100 |
| VOC(g/L) | | 380 | 380 | 380 | 380 | 380 | 376 |
| Specific gravity | | 1.49 | 1.49 | 1.49 | 1.49 | 1.49 | 1.48 |
| Heating residue (weight%) | | 74.4 | 74.4 | 74.4 | 74.4 | 74.4 | 74.4 |

PGM-AC: Propylene glycol monomethyl ether acetate

Table 5 (Continuation)

| | | Comparative Examples | | | | | |
|---|---|---|---|---|---|---|---|
| | | 7 | 8 | 9 | 10 | 11 | 12 |
| First Component | Polyester resin solution (a-1) | - | - | - | 17 | 17 | 16 |
| | Polyester resin solution (a-2) | 18 | - | - | - | - | - |
| | Polyester resin solution (a-3) | - | 18 | 18 | - | - | - |
| | (Meth)acrylic acid metal salt copolymer resin solution (a-6) | - | - | - | 1 | - | - |
| | (Meth)acrylic acid metal salt copolymer resin solution (a-7) | - | - | - | - | 1 | 2 |
| | Xylene | - | - | - | 2 | 2 | 2 |
| | n-butanol | - | - | - | - | - | - |
| | Methyl ethyl keton | - | - | - | - | - | - |
| | Methyl isobutyl keton | - | - | - | - | - | - |
| | Diacetyl | 2 | 2 | - | - | - | - |
| | 2,5-hexadion | - | - | 2 | - | - | - |
| | Subtotal | 20 | 20 | 20 | 20 | 20 | 20 |
| Second component | Xylene | 8 | 8 | 8 | 8 | 8 | 8 |
| | PGM-AC | 1 | 1 | 1 | 1 | 1 | 1 |
| | Rosin | 5.5 | 5.5 | 5.5 | 5.5 | 5.5 | 5.5 |
| | TOYOPARAX 150 | 2 | 2 | 2 | 2 | 2 | 2 |
| | BYK-101 | 0.5 | 0.5 | 0.5 | 0.5 | 0.5 | 0.5 |
| | Zinc oxide | 20 | 20 | 20 | 20 | 20 | 20 |
| | Talc FC-1 | 8 | 8 | 8 | 8 | 8 | 8 |
| | Potash feldspar | 5 | 5 | 5 | 5 | 5 | 5 |
| | Zinc Omadine | 7 | 7 | 7 | 10 | 10 | 10 |
| | Calcined gypsum FT-2 | 1 | 1 | 1 | 1 | 1 | 1 |
| | Dis4200-20X (Anti-settling agent) | 1 | 1 | 1 | 1 | 1 | 1 |
| | 4,5-dichloro-2-n-octyl-4-isothiazoline-3-one | 10 | 10 | 10 | 10 | 10 | 10 |
| | 2-methylthio-4-t-butylamino-6-cyclopropyl amino-s-triazine | 3 | 3 | 3 | - | - | - |
| | N,N'-dimethyl-N'-tolyl-(N-fluoro dichloromethylthio)sulfamide | - | - | - | - | - | - |
| | Pyridine-triphenylborane | - | - | - | - | - | - |
| | 2-(p-chlorophenyl)-3-cyano-4-bromo-5-trifluoromethyl pyrrole | - | - | - | - | - | - |
| | Red iron oxide Gekko BB | 3 | 3 | 3 | 3 | 3 | 3 |
| | Organic red pigment (Novaperm Red F5RK) | 0.5 | 0.5 | 0.5 | 0.5 | 0.5 | 0.5 |
| | Titanium white R-5N | 3 | 3 | 3 | 3 | 3 | 3 |
| | Dis630-20XC (Anti-sagging agent) | 1.5 | 1.5 | 1.5 | 1.5 | 1.5 | 1.5 |
| | Subtotal | 80 | 80 | 80 | 80 | 80 | 80 |
| | Total | 100 | 100 | 100 | 100 | 100 | 100 |
| VOC(g/L) | | 375 | 376 | 376 | 370 | 384 | 388 |
| Specific gravity | | 1.48 | 1.48 | 1.48 | 1.49 | 1.49 | 1.49 |
| Heating residue (weight%) | | 74.4 | 74.4 | 74.4 | 75.1 | 74 | 73.8 |

PGM-AC: Propylene glycol monomethyl ether acetate

Table 6

| | | Comparative Examples | | | | Examples | |
|---|---|---|---|---|---|---|---|
| | | 13 | 14 | 15 | 16 | 1 | 2 |
| First Component | Polyester resin solution (a-1) | 18 | - | 18 | - | 18 | - |
| | Polyester resin solution (a-2) | - | 18 | - | 18 | - | 18 |
| | Acetyl acetone | 2 | 2 | 2 | 2 | 2 | 2 |
| | Subtotal | 20 | 20 | 20 | 20 | 20 | 20 |
| Second Component | Xylene | 8 | 8 | 8 | 8 | 8 | 8 |
| | PGM-AC | 1 | 1 | 1 | 1 | 1 | 1 |
| | Rosin | 5.5 | 5.5 | 5.5 | 5.5 | 5.5 | 5.5 |
| | TOYOPARAX 150 | 2 | 2 | 2 | 2 | 2 | 2 |
| | BYK-101 | 0.5 | 0.5 | 0.5 | 0.5 | 0.5 | 0.5 |
| | Zinc oxide | - | - | 10 | 10 | 20 | 20 |
| | Cupric oxide | 20 | 20 | 10 | 10 | - | - |
| | Talc FC-1 | 8 | 8 | 8 | 8 | 8 | 8 |
| | Potash feldspar | 5 | 5 | 5 | 5 | 5 | 5 |
| | Zinc Omadine | 10 | 10 | 10 | 10 | 10 | 10 |
| | Calcined gypsum FT-2 | 1 | 1 | 1 | 1 | 1 | 1 |
| | Dis4200-20X (Anti-settling agent) | 1 | 1 | 1 | 1 | 1 | 1 |
| | 4,5-dichloro-2-n-octyl-4-isothiazoline-3-one | 10 | 10 | 10 | 10 | 10 | 10 |
| | Red iron oxide Gekko BB | 3 | 3 | 3 | 3 | 3 | 3 |
| | Organic red pigment (Novaperm Red F5RK) | 0.5 | 0.5 | 0.5 | 0.5 | 0.5 | 0.5 |
| | Titanium white R-5N | 3 | 3 | 3 | 3 | 3 | 3 |
| | Dis630-20XC (Anti-sagging agent) | 1.5 | 1.5 | 1.5 | 1.5 | 1.5 | 1.5 |
| | Subtotal | 80 | 80 | 80 | 80 | 80 | 80 |
| Total | | 100 | 100 | 100 | 100 | 100 | 100 |

PGM-AC: Propylene glycol monomethyl ether acetate

<Evaluation of properties>

1. Evaluation of properties of polyester resin and (meth)acrylic resin metal salt copolymer

(1) The average molecular weights (weight-average molecular weight and number-average molecular weight) of the polyester resin or the (meth) acrylic acid metal salt copolymer contained in each of the resin solutions were measured with GPC under the following conditions using standard polystyrene calibration curve.

(GPC measurement conditions)

Device: L-6200 manufactured by Hitachi
Column: Hitachi Chemical Gelpack GL-420, GL-430, and GL-440
Eluent: THF

Flow rate: 2.0 ml/min

(2) Solid content (weight NV)

1 g of the resin solution containing the polyester resin solution or the (meth)acrylic acid metal salt copolymer was weighted on a flat-bottom plate, spread the evenly using a wire of known weight and dried for 1 hour at 125°C, to prepare a heating residue (solid content, nonvolatile content). The mass of the residue and of the wire was measured to calculate the content (weight%) of the solid content (heating residue, nonvolatile content).

(3) Acid value (mgKOH/g) and Hydroxyl value (mgKOH/g)

The acid value and the hydroxyl value of the resin solution containing the polyester resin solution or the (meth) acrylic acid metal salt copolymer were determined by KOH titration method and acetylation method. Also, the acid value and the hydroxyl value of the solid content of the polyester resin solution or of the resin solution containing the (meth)acrylic acid metal-salt copolymer were determined by KOH titration method and acetylation method. The solid content had been prepared based upon the aforementioned "(2) Solid content (weight NV)").

The acid value and the hydroxyl value of the solid content of the reaction solution in Production Examples 1 to 3 were determined in the same manner.

(4) Viscosity of resin solution containing polyester resin

The viscosity (mPa·s) of the resin solution containing the polyester resin was measured with a B type viscometer at 25°C.

(5) Viscosity of (meth)acrylic acid metal salt copolymer

The viscosity of the (meth) acrylic acid metal salt copolymer was measured with a Gardner bubble viscometer, and was indicated using Gardner-Holdt units.

2. Evaluation of properties of antifouling paint composition

Properties of the antifouling paint compositions of Examples 1 to 12 and Comparative Examples 1 to 16 and of coating films formed by using the compositions were evaluated in the following manner. The results thereof are shown in Tables 7 to 9.

(1) Measurement of volatile organic compound (VOC) content

The specific gravity and weight NV of the above paint were used to calculate the content of VOC based on the following equation.

$$\text{Content of VOC (g/L)} = \text{Paint specific gravity} \times 1000 \times (100 - \text{Weight NV})/100$$

(2) Specific gravity

Immediately after preparing a mixed paint by mixing the first component with the second component of the antifouling paint composition, a specific gravity cup with an internal volume of 100 ml was filled with 100 ml of the mixed paint at 25°C, and then the specific gravity (paint specific gravity) (g/cm$^3$) was calculated by measuring the mass of the mixed paint.

(3) Heating residue (weight NV)

Immediately after preparing a mixed paint by mixing the first component with the second component in the antifouling paint composition, 1 g of the mixed paint was weighed on a flat-bottom plate, spread evenly with a wire of known weight, and dried at 125°C for 1 hour. The heating residue (solid content, nonvolatile content) and the wire were weighed to calculate the content (weight%) of the heating residue (solid content, nonvolatile content).

(4) Viscosity measurement of mixed paint

At a paint temperature of 23°C or 5°C, a mixed paint was prepared by mixing the first component with the second component of the antifouling paint composition, 1000 g of the mixed paint at 60 minutes after its preparation was weighed and stirred, and the viscosity (Poise) was measured with a B type viscometer (at 60 rpm).

(5) Coating workability (atomization and coating film appearance)

A mixed paint was prepared by mixing the first component with the second component of the antifouling paint composition at a paint temperature of 23°C or 5°C, and 5000 g of the mixed paint was stirred. This mixed paint was allowed to stand still for 60 minutes at a temperature of 23°C or 5°C, and thereafter was sprayed onto a substrate (60 cm × 60 cm, material: tin plate, manufactured by TP Giken Co., Ltd.) by using an airless spray. The coating workability (atomization and coating film appearance) at this time was evaluated based upon the following evaluation criteria.

[Evaluation criteria for atomization]

A: When the mixed paint was applied on a substrate using an airless spray, the mixed paint was sprayed as fine particles (in a mist form), and the spray pattern showed a uniform pattern without streaks or the like (favorable atomization).
B: When the mixed paint was applied on a substrate using an airless spray, the mixed paint was not sprayed as fine particles (in a mist form), and the spray pattern showed a pattern with streaks (unfavorable atomization).
[Evaluation criteria of coating film appearance]

A: The surface of a coating film formed on a substrate is free from problems such as generation of fine particles, lowered luster and leveling defect (favorable appearance).
B: The surface of a coating film formed on a substrate is free from problems such as generation of fine particles, lowered luster and leveling defect (unfavorable appearance).

(6) Antifouling coating film consumption degree test

With an applicator, a mixed paint prepared by mixing the first component with the second component of the antifouling paint composition was applied on a hard vinyl chloride plate of 50 × 50 × 1.5 mm so as to provide a 150 μm dry film thickness, and was dried for 7 days at room temperature (approximately 20°C) to prepare a test plate.
This test plate was attached to the side of a rotating drum installed in a thermostatic bath containing 25°C seawater, which was rotated at a peripheral rate of 15 knots, and the antifouling coating film consumption degree (film thickness reduction) was measured each month.

(7) Antifouling coating film static antifouling properties test

A sand blast-treated steel sheet (100 × 300 × 3.2 mm) was coated with an epoxy-based paint ("BANNOH 500", product of Chugoku Marine Paints, Ltd.) so as to provide a dry film thickness of 150 μm, and was further coated with an epoxy-based binder paint ("BANNOH 500N", product of Chugoku Marine Paints, Ltd.) so as to provide a dry film thickness of 100 μm, and the above coating procedures in the above order were performed every other day. Thereafter, a mixed paint prepared by mixing the first component with the second component in the antifouling paint composition was applied onto the surface of the coating film formed by the epoxy-based binder paint, with an interval of one day for the coating procedures so as to provide a dry film thickness of 150 μm, to thereby form a test plate. The test plate was dried at 23°C for 7 days, and then stationarily submerged in Nagasaki Bay, Nagasaki Prefecture, and the area of the attachment of organisms was visually observed each month and evaluated based on the following criteria.

[Evaluation of static antifouling properties]

0: No attachment of aquatic organisms
0.5: More than 0% and not more than 10% attachment area of aquatic organisms
1: More than 10% and not more than 20% attachment area of aquatic organisms
2: More than 20% and not more than 30% attachment area of aquatic organisms
3: More than 30% and not more than 40% attachment area of aquatic organisms

4: More than 40% and not more than 50% attachment area of aquatic organisms

5: More than 50% attachment area of aquatic organisms

Table 7

| | | | Examples | | | | | |
|---|---|---|---|---|---|---|---|---|
| | | | 1 | 2 | 3 | 4 | 5 | 6 |
| Mixed paint | VOC content (g/L) | | 380 | 380 | 380 | 380 | 376 | 379 |
| | Specific gravity | | 1.49 | 1.49 | 1.49 | 1.49 | 1.48 | 1.49 |
| | Heating residue (weight%) | | 74.4 | 74.4 | 74.4 | 74.4 | 74.4 | 74.4 |
| Paint temperature 23°C | Viscosity of mixed paint (poise) | | 9 | 8 | 9 | 10 | 9 | 9 |
| | Coating workability (left for 60 minutes after preparation of mixed paint) | Atomization property | A | A | A | A | A | A |
| | | Appearance | A | A | A | A | A | A |
| Paint temperature 5°C | Viscosity of mixed paint (poise) | | 17 | 17 | 19 | 18 | 18 | 18 |
| | Coating workability (left for 60 minutes after preparation of mixed paint) | Atomization property | A | A | A | A | A | A |
| | | Appearance | A | A | A | A | A | A |
| Antifouling coating film consumption degree test (25°C/15 knots) | | 1 month | 24.5 | 18.9 | 21.2 | 19.8 | 19.7 | 23.3 |
| | | 2 months | 31.5 | 29.9 | 30.7 | 27.8 | 28.7 | 30.4 |
| | | 3 months | 39.8 | 33.4 | 41.3 | 37.8 | 37.6 | 43.3 |
| | | 4 months | 50.3 | 41.8 | 52.5 | 49.5 | 48.9 | 46.7 |
| | | 5 months | 60.3 | 52.3 | 63.1 | 58.6 | 57.6 | 60.9 |
| | | 6 months | 70.5 | 69.7 | 75.6 | 68.3 | 68.2 | 72.5 |
| Antifouling coating film static antifouling properties test | | 1 month | 0 | 0 | 0 | 0 | 0 | 0 |
| | | 2 months | 0 | 0 | 0 | 0 | 0 | 0 |
| | | 3 months | 0 | 0.5 | 0 | 0 | 0.5 | 0.5 |
| | | 4 months | 0.5 | 0.5 | 0.5 | 0.5 | 0.5 | 0.5 |
| | | 5 months | 0.5 | 0.5 | 0.5 | 0.5 | 0.5 | 0.5 |
| | | 6 months | 0.5 | 0.5 | 0.5 | 0.5 | 0.5 | 0.5 |
| | | 8 months | 1 | 1 | 1 | 1 | 0.5 | 0.5 |
| | | 10 months | 1 | 1 | 1 | 1 | 0.5 | 0.5 |
| | | 12 months | 2 | 2 | 2 | 2 | 1 | 1 |

Table 7 (Continuation)

| | | | Examples | | | | | |
|---|---|---|---|---|---|---|---|---|
| | | | 7 | 8 | 9 | 10 | 11 | 12 |
| Mixed paint | VOC content (g/L) | | 375 | 380 | 381 | 370 | 384 | 388 |
| | Specific gravity | | 1.47 | 1.49 | 1.49 | 1.49 | 1.49 | 1.49 |
| | Heating residue (weight%) | | 74.4 | 74.4 | 74.4 | 75.1 | 74 | 73.8 |
| Paint temperature 23°C | Viscosity of mixed paint (poise) | | 10 | 9 | 9 | 9 | 10 | 9 |
| | Coating workability (left for 60 minutes after preparation of mixed paint) | Atomization property | A | A | A | A | A | A |
| | | Appearance | A | A | A | A | A | A |
| Paint temperature 5°C | Viscosity of mixed paint (poise) | | 17 | 19 | 19 | 17 | 18 | 18 |
| | Coating workability (left for 60 minutes after preparation of mixed paint) | Atomization property | A | A | A | A | A | A |
| | | Appearance | A | A | A | A | A | A |
| Antifouling coating film consumption degree test (25°C/15 knots) | | 1 month | 16.7 | 18.9 | 19.3 | 23.5 | 25.6 | 29.8 |
| | | 2 months | 29.7 | 26.7 | 27.7 | 35.7 | 40.5 | 45.3 |
| | | 3 months | 41.8 | 34.5 | 35.3 | 48.7 | 51.3 | 59.8 |
| | | 4 months | 55.8 | 43.7 | 42.7 | 61.2 | 63.7 | 74.5 |
| | | 5 months | 69.7 | 50.5 | 49.8 | 79.8 | 80.3 | 89.7 |
| | | 6 months | 82.3 | 58.8 | 57.6 | 98.7 | 103.5 | 110.5 |
| Antifouling coating film static antifouling properties test | | 1 month | 0 | 0 | 0 | 0 | 0 | 0 |
| | | 2 months | 0 | 0 | 0 | 0 | 0 | 0 |
| | | 3 months | 0.5 | 0 | 0 | 0 | 0 | 0 |
| | | 4 months | 0.5 | 0.5 | 0 | 0 | 0 | 0 |
| | | 5 months | 0.5 | 0.5 | 0 | 0 | 0 | 0 |
| | | 6 months | 0.5 | 0.5 | 0.5 | 0.5 | 0.5 | 0.5 |
| | | 8 months | 0.5 | 0.5 | 0.5 | 1 | 1 | 1 |
| | | 10 months | 1 | 0.5 | 0.5 | 1 | 1 | 1 |
| | | 12 months | 1 | 0.5 | 0.5 | 2 | 2 | 2 |

Table 8

| | | | Comparative Examples 1 | 2 | 3 | 4 | 5 | 6 |
|---|---|---|---|---|---|---|---|---|
| Mixed paint | VOC content (g/L) | | 380 | 380 | 380 | 380 | 380 | 376 |
| | Specific gravity | | 1.49 | 1.49 | 1.49 | 1.49 | 1.49 | 1.48 |
| | Heating residue (weight%) | | 74.4 | 74.4 | 74.4 | 74.4 | 74.4 | 74.4 |
| Paint temperature 23°C | Viscosity of mixed paint (poise) | | 21 | 19 | 18 | 19 | 18 | 18 |
| | Coating workability (left for 60 minutes after preparation of mixed paint) | Atomization property | A | A | A | A | A | A |
| | | Appearance | A | A | A | A | A | A |
| Paint temperature 5°C | Viscosity of mixed paint (poise) | | 59 | 58 | 60 | 59 | 58 | 59 |
| | Coating workability (left for 60 minutes after preparation of mixed paint) | Atomization property | B | B | B | B | B | B |
| | | Appearance | B | B | B | B | B | B |
| Antifouling coating film consumption degree test (25°C/15 knots) | | 1 month | 17.8 | 19.8 | 16.7 | 14.3 | 17.9 | 17.5 |
| | | 2 months | 29.8 | 27.8 | 23.5 | 19.9 | 23.4 | 22.5 |
| | | 3 months | 36.2 | 34.5 | 29.8 | 25.6 | 28.7 | 29.9 |
| | | 4 months | 43.7 | 42.3 | 35.6 | 32.4 | 33.2 | 34.5 |
| | | 5 months | 49.7 | 49.6 | 41.6 | 38.7 | 39.8 | 40.1 |
| | | 6 months | 54.7 | 54.5 | 49.8 | 43.3 | 43.3 | 45.6 |
| Antifouling coating film static antifouling properties test | | 1 month | 0 | 0 | 0 | 0 | 0 | 0 |
| | | 2 months | 0 | 0 | 0 | 0 | 0 | 0 |
| | | 3 months | 0.5 | 0.5 | 0.5 | 0.5 | 0.5 | 0.5 |
| | | 4 months | 1 | 0.5 | 0.5 | 0.5 | 0.5 | 0.5 |
| | | 5 months | 1 | 1 | 1 | 1 | 1 | 1 |
| | | 6 months | 1 | 1 | 1 | 1 | 1 | 1 |
| | | 8 months | 1 | 1 | 1 | 1 | 1 | 1 |
| | | 10 months | 2 | 2 | 2 | 2 | 2 | 1 |
| | | 12 months | 2 | 2 | 2 | 2 | 2 | 1 |

Table 8 (Continuation)

| | | | Comparative Examples | | | | | |
|---|---|---|---|---|---|---|---|---|
| | | | 7 | 8 | 9 | 10 | 11 | 12 |
| Mixed paint | VOC content (g/L) | | 376 | 376 | 376 | 384 | 384 | 387 |
| | Specific gravity | | 1.48 | 1.48 | 1.48 | 1.49 | 1.49 | 1.49 |
| | Heating residue (weight%) | | 74.4 | 74.4 | 74.4 | 74.1 | 74.1 | 73.9 |
| Paint temperature 23°C | Viscosity of mixed paint (poise) | | 19 | 20 | 19 | 18 | 19 | 21 |
| | Coating workability (left for 60 minutes after preparation of mixed paint) | Atomization property | A | A | A | A | A | A |
| | | Appearance | A | A | A | A | A | A |
| Paint temperature 5°C | Viscosity of mixed paint (poise) | | 59 | 59 | 59 | 57 | 62 | 63 |
| | Coating workability (left for 60 minutes after preparation of mixed paint) | Atomization property | B | B | B | B | B | B |
| | | Appearance | B | B | B | B | B | B |
| Antifouling coating film consumption degree test (25°C/15 knots) | | 1 month | 16 | 18.7 | 15.3 | 20.3 | 18.9 | 20.3 |
| | | 2 months | 23.4 | 25.1 | 21.4 | 28.9 | 24.5 | 30.1 |
| | | 3 months | 30.3 | 29.7 | 29.4 | 34.5 | 35.6 | 44.5 |
| | | 4 months | 36.7 | 31.3 | 35.6 | 45.6 | 49.8 | 55.4 |
| | | 5 months | 42.8 | 36.7 | 41.3 | 55.7 | 67.3 | 70.6 |
| | | 6 months | 46.7 | 43.5 | 45.6 | 72.3 | 83.3 | 88.6 |
| Antifouling coating film static antifouling properties test | | 1 month | 0 | 0 | 0 | 0 | 0 | 0 |
| | | 2 months | 0 | 0 | 0 | 0 | 0 | 0 |
| | | 3 months | 0.5 | 0.5 | 0.5 | 0 | 0 | 0 |
| | | 4 months | 1 | 1 | 1 | 0.5 | 0.5 | 0.5 |
| | | 5 months | 1 | 1 | 1 | 0.5 | 1 | 0.5 |
| | | 6 months | 1 | 1 | 1 | 1 | 1 | 1 |
| | | 8 months | 1 | 1 | 1 | 1 | 1 | 1 |
| | | 10 months | 1 | 1 | 1 | 2 | 1 | 1 |
| | | 12 months | 1 | 1 | 1 | 2 | 2 | 2 |

Table 9

| | | | Comparative Examples | | | | Examples | |
|---|---|---|---|---|---|---|---|---|
| | | | 13 | 14 | 15 | 16 | 1 | 2 |
| Mixed paint | VOC content (g/L) | | 369 | 369 | 369 | 369 | 380 | 380 |
| | Specific gravity | | 1.87 | 1.87 | 1.87 | 1.87 | 1.49 | 1.49 |
| | Heating residue (weight%) | | 80.2 | 80.2 | 80.2 | 80.2 | 74.4 | 74.4 |
| Paint temperature 23°C | Viscosity of mixed paint (poise) | | 13 | 15 | 13 | 15 | 9 | 8 |
| | Coating workability (left for 60 minutes after preparation of mixed paint) | Atomization property | B | B | B | B | A | A |
| | | Appearance | B | B | B | B | A | A |
| Paint temperature 5°C | Viscosity of mixed paint (poise) | | 15 | 17 | 15 | 17 | 17 | 17 |
| | Coating workability (left for 60 minutes after preparation of mixed paint) | Atomization property | B | B | B | B | A | A |
| | | Appearance | B | B | B | B | A | A |
| Antifouling coating film consumption degree test (25°C/15 knots) | | 1 month | 12.3 | 13.3 | 17.8 | 16.8 | 24.5 | 18.9 |
| | | 2 months | 15.6 | 17.2 | 27.7 | 25.4 | 31.5 | 29.9 |
| | | 3 months | 19.9 | 21.4 | 33.5 | 32.6 | 39.8 | 33.4 |
| | | 4 months | 24.5 | 24.5 | 38.9 | 37.9 | 50.3 | 41.8 |
| | | 5 months | 29.7 | 27.8 | 44.5 | 45.6 | 60.3 | 52.3 |
| | | 6 months | 32.5 | 31.3 | 50.1 | 52.3 | 70.5 | 69.7 |
| Antifouling coating film static antifouling properties test | | 1 month | 0 | 0 | 0 | 0 | 0 | 0 |
| | | 2 months | 0 | 0 | 0 | 0 | 0 | 0 |
| | | 3 months | 0.5 | 0.5 | 0.5 | 0.5 | 0 | 0.5 |
| | | 4 months | 1 | 1 | 0.5 | 0.5 | 0.5 | 0.5 |
| | | 5 months | 1 | 1 | 1 | 1 | 0.5 | 0.5 |
| | | 6 months | 1 | 1 | 2 | 1 | 0.5 | 0.5 |
| | | 8 months | 1 | 1 | 2 | 1 | 1 | 1 |
| | | 10 months | 1 | 1 | 2 | 1 | 1 | 1 |
| | | 12 months | 2 | 2 | 3 | 2 | 2 | 2 |

The details of a part of raw materials used in the Examples and Comparative Examples are shown in Table 10.

Table 10

| Product name | Manufacturer | Kinds | Solid content |
|---|---|---|---|
| Talc FC-1 | Fukuoka Talc Co., Ltd. | Extender pigment | 100 |
| Zinc oxide | Kyushu Hakusui Kagaku | Extender pigment | 100 |
| Novaperm Red F5RK | Clariant North America | Organic red pigment | 100 |
| Red iron oxide Gekko BB | Toda Kogyo K.K. | Inorganic red pigment | 100 |
| Titanium white R-5N | Sakai Chemical Industry Co., Ltd. | Inorganic white pigment | 100 |

(continued)

| Product name | Manufacturer | Kinds | Solid content |
|---|---|---|---|
| Zinc omadine | Arch Chemical, Inc. | Organic antifouling agent | 100 |
| Calcined gypsum FT-2 | Noritake Co., Ltd. | Extender pigment | 100 |
| Potash feldspar | KINSEI MATIC | Potash feldspar | 100 |
| TOYOPARAX 150 | Tosoh Corporation | Chlorinated paraffin | 100 |
| Tricresyl phosphate | Kyowa Hakko Kogyo Co., Ltd. | Plasticizer | 100 |
| Quintone 1500 | Zeon Corporation | Alicyclic hydrocarbon | 100 |
| Laropal A81 | BASF | Ketone resin | 100 |
| 4,5-dichloro-2-n-octyl-4-isothiazoline-3-one Sea-Nine211 | Rohm & Haas Company | Organic antifouling agent | 30 |
| Rosin | | | |
| BYK-101 | BYK CHEMICAL | Pigment dispersant | 100 |
| 2-methylthio-4-t-butylamino-6-cyclopropyl amino-s-triazine | Ciba | Organic antifouling agent | 100 |
| (N-fluorodichloromethylthio) | Bayer Japan | Organic antifouling agent | 100 |
| 4-bromo-5-trifluoromethyl pyrrole | JANSSEN | Organic antifouling agent | 100 |
| Pyridine-triphenylborane | Hokko Chemical Industry, Co., Ltd. | Organic antifouling agent | 100 |
| Medetomidine | i-Tech | Organic antifouling agent | 100 |
| Cupric oxide NC-803 | NC Tech Co., Ltd. | Inorganic antifouling agent | 100 |
| Dis630-20XC | Kusumoto Chemicals, Co., Ltd. | Anti-sagging agent | 20 |
| Dis4200-20X | Kusumoto Chemicals, Co., Ltd. | Anti-settling agent | 20 |

## Claims

**1.** A two-component hydrolyzable antifouling paint composition comprising two liquids that are a first component and a second component,

the first component comprising a reaction mixture (A) comprising a polyester resin (a3) obtained by polycondensation of an acid component (a1) and a polyhydric alcohol component (a2), and an acetoacetyl group-containing compound (B),

the second component comprising a zinc oxide (C),

the solid content of the reaction mixture (A) having an acid value and a hydroxyl value of 50 to 200 mgKOH/g and 100 mgKOH/g or less, respectively, and

the two-component hydrolyzable antifouling paint composition substantially not containing copper and copper compounds.

2. The two-component hydrolyzable antifouling paint composition according to claim 1, wherein the second component comprises a rosin and/or rosin derivative (D).

3. The two-component hydrolyzable antifouling paint composition according to claim 1 or 2, wherein the reaction mixture (A) comprises the polyester resin (a3) that has a weight-average molecular weight (Mw) of 5,000 or less, as measured by gel permeation chromatography (GPC).

4. The two-component hydrolyzable antifouling paint composition according to any one of claims 1 to 3, wherein the content of the zinc oxide (C) is 10 to 300 parts by weight relative to 100 parts by weight of the solid content of the reaction mixture (A).

5. The two-component hydrolyzable antifouling paint composition according to claim 2, wherein the content of the rosin and/or rosin derivative (D) is 0.5 to 300 parts by weight relative to 100 parts by weight of the solid content of the reaction mixture (A).

6. The two-component hydrolyzable antifouling paint composition according to any one of claims 2 to 5, wherein the content of the acetoacetyl group-containing compound (B) is 0.1 to 80 parts by weight relative to 100 parts by weight of the rosin and/or rosin derivative (D).

7. The two-component hydrolyzable antifouling paint composition according to any one of claims 1 to 6, further comprising an antifouling agent excluding copper and copper compounds.

8. The two-component hydrolyzable antifouling paint composition according to claim 7, wherein the antifouling agent is zinc pyrithione.

9. The two-component hydrolyzable antifouling paint composition according to any one of claims 1 to 8, further comprising at least one plasticizer selected from the group consisting of chlorinated paraffin, petroleum resins, ketone resins, tricresyl phosphate, polyvinyl ethyl ether, dialkyl phthalate and (meth)acrylic polymers.

10. The two-component hydrolyzable antifouling paint composition according to any one of claims 1 to 9, further comprising a (meth)acrylic acid metal salt copolymer.

11. The two-component hydrolyzable antifouling paint composition according to any one of claims 1 to 10, further comprising an extender pigment excluding zinc oxide.

12. The two-component hydrolyzable antifouling paint composition according to any one of claims 1 to 11, further comprising a pigment dispersant.

13. The two-component hydrolyzable antifouling paint composition according to any one of claims 1 to 12, further comprising a color pigment.

14. The two-component hydrolyzable antifouling paint composition according to any one of claims 1 to 13, further comprising a dehydrating agent.

15. The two-component hydrolyzable antifouling paint composition according to any one of claims 1 to 14, wherein the content of a volatile organic compound excluding the acetoacetyl-group containing compound (B) is 400 g or less per 1 L of the two-component hydrolyzable antifouling paint composition.

16. The two-component hydrolyzable antifouling paint composition according to any one of claims 1 to 15, wherein the viscosity of a paint prepared by mixing the first component with the second component, as measured at 5°C at 60 minutes later from the preparation of the paint, is 2 Pa·s or less.

17. An antifouling coating film formed by hardening the two-component hydrolyzable antifouling paint composition according to any one of claims 1 to 16.

18. A method for producing an antifouling substrate comprising coating or impregnating a substrate with the two-component hydrolyzable antifouling paint composition according to any one of claims 1 to 16 and then hardening the composition to thereby form an antifouling coating film.

**19.** A method for producing a two-component antifouling paint composition, the method comprising the following steps (1) and (2) that are carried out in an arbitrary order,
the two-component antifouling paint composition comprising two liquids that are the following first component and the second component,
the solid content of a reaction mixture prepared in the step (1) having an acid value and a hydroxyl value of 50 to 200 mgKOH/g and 100 mgKOH/g or less, respectively,
the two-component antifouling paint composition substantially not containing copper and copper compounds,
the step (1) being a step of polycondensing an acid component (a1) and a polyhydric alcohol component (a2) to prepare a reaction mixture (A) comprising a polyester resin (a3), and then mixing the reaction mixture (A) with an acetoacetyl group-containing compound (B) to prepare a first component; and
the step (2) being a step of preparing a second component that is a liquid comprising zinc oxide (C).

**INTERNATIONAL SEARCH REPORT**

International application No.
PCT/JP2012/065758

A. CLASSIFICATION OF SUBJECT MATTER
*C09D167/00*(2006.01)i, *B05D5/00*(2006.01)i, *B05D7/24*(2006.01)i, *B63B59/04*(2006.01)i, *C09D5/16*(2006.01)i, *C09D7/12*(2006.01)i

According to International Patent Classification (IPC) or to both national classification and IPC

B. FIELDS SEARCHED

Minimum documentation searched (classification system followed by classification symbols)
C09D1/00-C09D201/10, B05D1/00-B05D7/26, A01N1/00-A01N65/48, B63B59/00-B63B59/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2010/073995 A1 (National Maritime Research Institute), 01 July 2010 (01.07.2010), claims & KR 2011086639 A & EP 2368949 A1 & CN 102224209 A & VN 27833 A | 1-19 |
| Y | WO 2007/074656 A1 (Chugoku Marine Paints, Ltd.), 05 July 2007 (05.07.2007), claims; paragraphs [0104], [0105] & NO 200803263 A & EP 1978065 A1 & IN 200805954 A1 & KR 2008078902 A & CN 101351514 A & RU 2401288 C2 & US 2010/0278876 A1 | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 September, 2012 (10.09.12) | 18 September, 2012 (18.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/065758

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2007/026692 A1 (Chugoku Marine Paints, Ltd.), 08 March 2007 (08.03.2007), claims & IN 200706938 A1 & EP 1921119 A1 & NO 200801492 A & CN 101166801 A & KR 2008034037 A & US 2009/0053166 A1 & VN 22347 A1 & VN 22348 A1 | 1-19 |
| Y | JP 62-57464 A (Nippon Paint Co., Ltd.), 13 March 1987 (13.03.1987), claims & EP 204456 A1 & AU 8657524 A & NO 8601955 A & DK 8602313 A & ES 8801936 A & US 4774080 A | 1-19 |
| P,A | WO 2011/162359 A1 (Chugoku Marine Paints, Ltd.), 29 December 2011 (29.12.2011), (Family: none) | 1-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7166106 A
- JP 7082513 A
- JP 8176501 A
- JP 7053899 A
- JP 9132736 A
- JP 11255869 A
- JP 2000248206 A
- JP 57128742 A
- JP 2196869 A
- JP 10298455 A
- JP 2010095585 A
- JP 2000248207 A
- WO 2010073995 A